# EUROPEAN PATENT APPLICATION

(11) **EP 4 678 280 A1**
(43) Date of publication of application: **14.01.2026**
(21) Application number: 24770826.6
(22) Date of filing: 11.03.2024
(51) Int. Cl.: B01J 19/00, G01N 37/00

(54) **MICROFLUIDIC MODULE, MICROFLUIDIC SYSTEM, NUMBERING-UP METHOD, DESIGN METHOD, AND MAINTENANCE METHOD**

(30) Priority: 10.03.2023 JP 2023038148
(71) Applicant: IMT Taiwan Co., Ltd., Hsinchu City, 30013 (TW); Institute Of Microchemical Technology Co., Ltd., Kawasaki-shi, Kanagawa 212-0032 (JP)
(72) Inventor: KITAMORI, Takehiko, Hsinchu City, 30013 (TW)
(74) Representative: Grünecker Patent- und Rechtsanwälte PartG mbB
(86) International application number: PCT/JP2024/009234
(87) International publication number: WO 2024/190720

(57) **Abstract**

There is provided a microfluidic module including a plurality of microfluidic devices, each having a micro flow path formed in a substrate and being configured to perform a unit operation on a fluid flowing in the micro flow path, the microfluidic module including a plurality of chip series units, each at least including a plurality of the microfluidic devices connected in series to one another, the plurality of chip series units being connected in parallel to one another.

## Description

### Technical Field

The present disclosure relates to a microfluidic module, a microfluidic system, a numbering-up method, a design method, and a maintenance method.

### Background Art

A technology for, using a microfluidic device having a minute micro flow path, performing unit operations as chemical/physical processes on fluids flowing in the micro flow path has recently been proposed. As this type of microfluidic device, a microreactor is known that performs mixing and reaction (chemical/physical reaction) of fluids flowing in the micro flow path.

In the actual situation, yield of a reaction product that can be produced per microreactor is low. Thus, a microreactor system in which a plurality of microreactors are connected in parallel has also been proposed (see, for example, Patent documents 1 to 3, and the like). Such a method for connecting a plurality of microreactors in parallel is also referred to as numbering-up.

### Citation List

### Patent document

Patent document 1: Japanese Patent Laid-Open No. 2008-221095

### Summary of the Invention

### Problems to be Solved by the Invention

However, the publicly-known microreactor system merely has a plurality of microreactors connected in parallel and is limited in performing accurate unit operations in micro flow paths of the microreactors even if yield of a product can be increased.

A technology of the present disclosure has been made in view of the actual situation described above and has an object to provide a technology for enabling, in a microfluidic module including a plurality of devices, each having a micro flow path, unit operations on fluids flowing in the micro flow path to be performed accurately and enabling yield of a product to be increased.

### Means for Solving the Problems

The following is a summary of the present disclosure.

### <Aspect 1>

Aspect 1 according to the present disclosure is a microfluidic module including a plurality of microfluidic devices, each having a micro flow path formed in a substrate and being configured to perform a unit operation on a fluid flowing in the micro flow path, the microfluidic module comprising a plurality of chip series units, each at least including the plurality of microfluidic devices connected in series to one another, the plurality of chip series units being connected in parallel to one another.

### <Aspect 2>

In Aspect 1, the microfluidic module may have a board form in which the plurality of microfluidic devices included in each of the chip series units connected in parallel are mounted on a board.

### <Aspect 3>

In Aspect 1, the chip series units may each include a microfluidic device reactor having a mixing and reaction flow path configured to mix a plurality of dissimilar fluids and cause reaction elements contained in a mixed fluid of the plurality of dissimilar fluids to react.

### <Aspect 4>

In Aspect 3, the chip series units may each include a plurality of the microfluidic device reactors.

### <Aspect 5>

A microfluidic system may comprise a plurality of the microfluidic modules according to Aspect 2 having the board form.

### <Aspect 6>

In Aspect 5, the plurality of microfluidic modules having the board form may be arranged in multiple stages.

### <Aspect 7>

Aspect 7 is a microfluidic system including a plurality of microfluidic devices, each having a micro flow path formed in a substrate and being configured to perform a unit operation on a fluid flowing in the micro flow path, the microfluidic system comprising a plurality of microfluidic modules having a board form in which the plurality of microfluidic devices connected in parallel to one another are mounted on a board.

### <Aspect 8>

In Aspect 7, the plurality of microfluidic modules having the board form may be arranged in multiple stages.

### <Aspect 9>

In addition, Aspect 9 is a numbering-up method for performing numbering-up by increasing a parallel number of the chip series units in the microfluidic module according to Aspect 1.

### <Aspect 10>

In addition, Aspect 10 is a microfluidic module design method for determining a parallel number of the chip series units in accordance with an objective manufacturing volume of a final product having been subjected to unit operation processing obtained in the microfluidic module according to Aspect 1.

### <Aspect 11>

In addition, Aspect 11 is a numbering-up method for performing numbering-up by increasing the number of the microfluidic modules in the microfluidic system according to Aspect 5.

### <Aspect 12>

In addition, Aspect 12 is a microfluidic system design method for determining the number of the microfluidic modules in accordance with an objective manufacturing volume of a final product having been subjected to unit operation processing obtained in a plurality of the microfluidic modules in the microfluidic system according to Aspect 5.

### <Aspect 13>

In addition, Aspect 13 is a maintenance method for, in a case in which an abnormality is sensed in any one of the microfluidic modules in the microfluidic system according to claim 5, stopping supply of a fluid as a raw material to the one of the microfluidic modules in which the abnormality has been sensed and replacing the one of the microfluidic modules in which the abnormality has been sensed with a new microfluidic module.

### Effects of the Invention

With the technology according to the present disclosure, a technology for enabling, in a microfluidic module including a plurality of devices, each having a micro flow path, unit operations on fluids flowing in the micro flow path to be performed accurately and enabling yield of a product to be increased can be provided.

### Brief Description of the Drawings

[Fig. 1] Fig. 1 is a schematic configuration diagram illustrating an example of a system according to a first embodiment.
[Fig. 2] Fig. 2 is a diagram illustrating microfluidic modules according to the first embodiment in a simplified manner.
[Fig. 3] Fig. 3 is a diagram illustrating an example of a microfluidic device according to the first embodiment.
[Fig. 4] Fig. 4 is a diagram describing a chip series unit according to the first embodiment.
[Fig. 5] Fig. 5 is a diagram describing a supply apparatus in the system according to the first embodiment.
[Fig. 6] Fig. 6 is a diagram describing a collection apparatus in the system according to the first embodiment.
[Fig. 7] Fig. 7 is a block diagram illustrating an example of a configuration of a control apparatus according to the first embodiment.
[Fig. 8] Fig. 8 is a view describing an example of setting the microfluidic modules according to the first embodiment.
[Fig. 9] Fig. 9 is a diagram describing a modification example of the chip series unit according to the first embodiment.
[Fig. 10] Fig. 10 is a diagram describing a modification example of the chip series unit according to the first embodiment.
[Fig. 11] Fig. 11 is a view describing a modification example of the microfluidic module according to the first embodiment.
[Fig. 12] Fig. 12 is a diagram describing a modification example of the microfluidic module according to the first embodiment.
[Fig. 13] Fig. 13 is a diagram describing a modification example of the system according to the first embodiment.

### Mode for Carrying Out the Invention

Hereinafter, a microfluidic module and a microfluidic system according to an embodiment of the present disclosure will be described with reference to the drawings. Respective components, their combinations, and the like in the embodiment are examples, and addition, omission, substitution, and other changes of components can be made as appropriate within a range not departing from the spirit of the present disclosure. The present disclosure is not limited by the embodiment and is limited only by the scope of claims. In addition, each aspect disclosed in the present specification can also be combined with any other feature disclosed in the present specification.

A microfluidic module according to an embodiment of the present disclosure is a microfluidic module including a plurality of microfluidic devices, each having a micro flow path formed in a substrate and being configured to perform a unit operation on a fluid flowing in the micro flow path. In the present specification, a "fluid" not only includes liquid and gas but may also include a mixture of liquid and gas as well as a mixed phase fluid in which solid is mixed in liquid and/or gas.

The microfluidic module includes a plurality of chip series units, each at least including a plurality of microfluidic devices connected in series to one another, the plurality of chip series units being connected in parallel to one another. For example, the microfluidic module has a board form in which the plurality of microfluidic devices included in each of the chip series units connected in parallel are mounted on a board.

In addition, a microfluidic system according to another embodiment is a microfluidic system including a plurality of the microfluidic devices mentioned above and includes a plurality of microfluidic modules having a board form in which a plurality of microfluidic devices connected in parallel to one another are mounted on a board.

### <First Embodiment>

### <<Microfluidic System>>

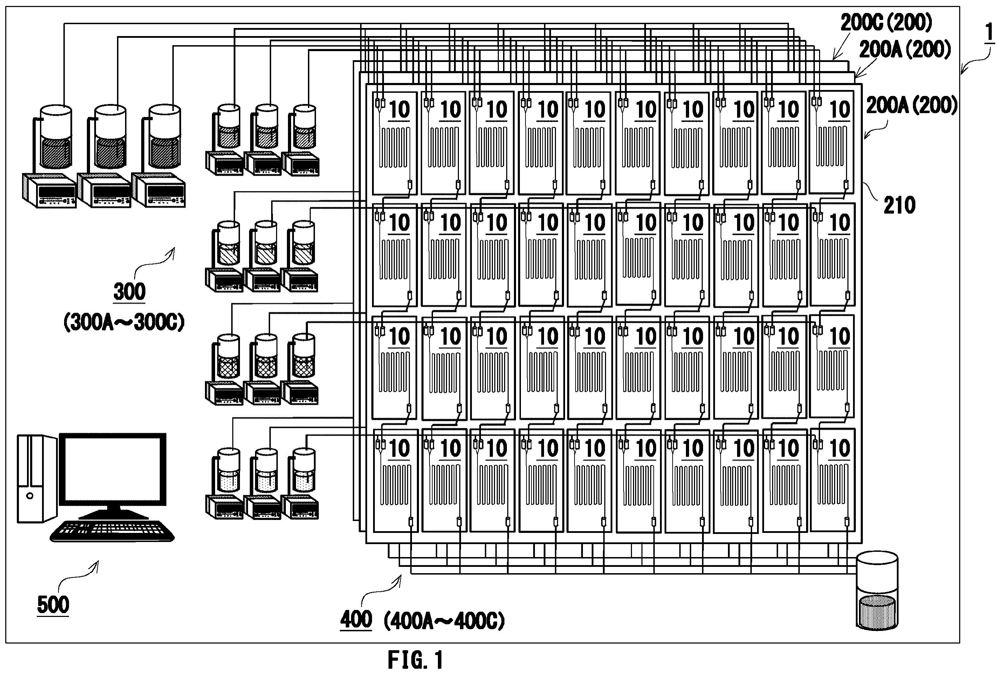

Fig. 1 is a schematic configuration diagram illustrating an example of a microfluidic system (hereafter also simply called a "system") 1 according to a first embodiment.

The system 1 includes a microfluidic module 200 including a plurality of microfluidic devices 10, a supply apparatus 300 that supplies fluids as raw materials to the microfluidic module 200, a collection apparatus 400 that collects a product from the microfluidic module 200, a control apparatus 500, and the like. The system 1 in the present embodiment is a system that performs unit operations (chemical/physical operations) as chemical/physical processes on fluids flowing in micro flow paths formed in the microfluidic devices 10 included in the microfluidic module 200. For example, the system 1 can be suitably used as a production system in a fabrication plant that fabricates a chemical or pharmaceutical, a system that performs an analytical process, and the like. However, the use of the system 1 is not limited to them.

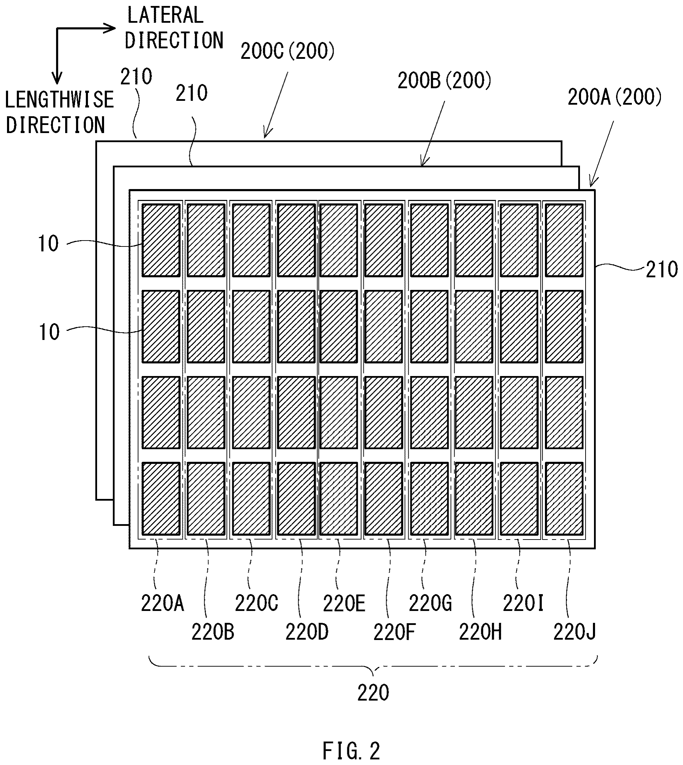

Fig. 2 is a diagram illustrating the microfluidic module 200 according to the first embodiment in a simplified manner. The microfluidic module 200 is a module including the plurality of microfluidic devices 10 and a board 210 on which the plurality of microfluidic devices 10 are mounted and having a chip-on-board form in which the plurality of microfluidic devices 10 are mounted on the board 210. The system 1 according to the present embodiment includes a plurality of microfluidic modules 200 (200A, 200B, 200C, ...), and these microfluidic modules 200 (200A, 200B, 200C, ...) are arranged in multiple stages. Although the example illustrated in Figs. 1 and 2 exemplifies a case in which the system 1 includes the three microfluidic modules 200 (200A, 200B, 200C), the number of the microfluidic modules 200 included in the system 1 is not particularly limited. In addition, in the example illustrated in Figs. 1 and 2, the board 210 of each of the microfluidic modules 200 (200A, 200B, 200C, ...) presents a rectangular shape, whilst the shape of the board 210 is not particularly limited. Obviously, the size of the board 210 is not particularly limited either.

Various aspects can be employed for the number and an arrangement pattern of the microfluidic devices 10 mounted on the board 210 of the microfluidic module 200, and in the example illustrated in Figs. 1 and 2, the microfluidic devices 10 are mounted on the board 210 in an arrangement pattern of four stages in a lengthwise direction and ten columns in a lateral direction. In Fig. 2, the microfluidic devices 10 are hatched for easier understanding of the microfluidic devices 10 mounted on the board 210 of the microfluidic module 200. Alternatively, as another example of the arrangement pattern of the microfluidic devices 10 mounted on the board 210, an aspect of ten stages in the lengthwise direction and eight columns in the lateral direction can also be exemplified. Obviously, the arrangement pattern of the microfluidic devices 10 mounted on the board 210 is not limited to a specific aspect.

### <<Microfluidic Device>>

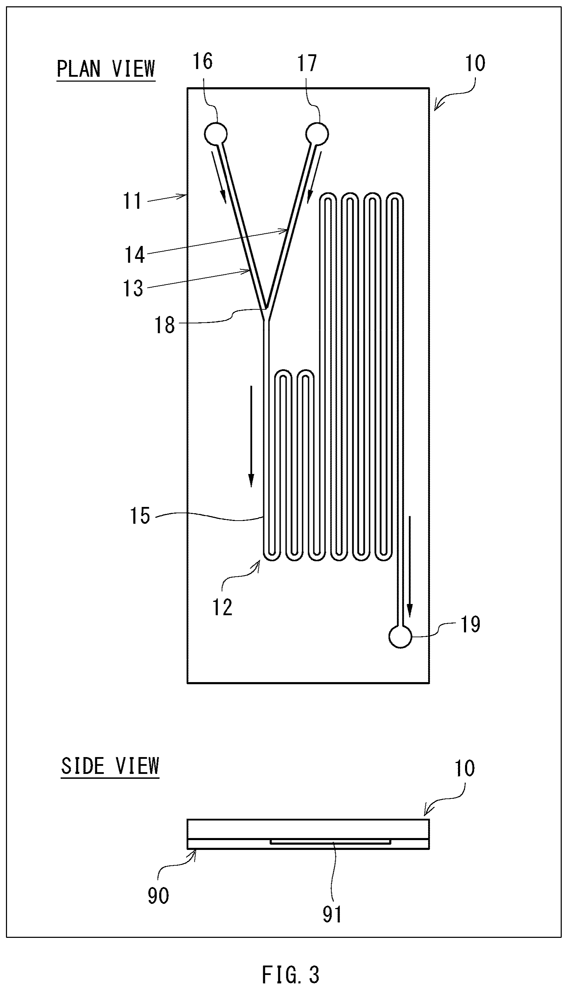

The microfluidic device 10 is a chip having a micro flow path (minute flow path) having a flow path width on the order of micrometer and is a device presenting a chip form (substrate form) for, in a course of passing fluids along the micro flow path from an upstream side toward a downstream side, performing unit operations on the fluids. The micro flow path in the microfluidic device 10 can take various forms in accordance with unit operations to be performed in the chip or another condition, for example, and an example of the microfluidic device 10 is illustrated in Fig. 3.

The unit operations to be performed in the microfluidic device 10 are not particularly limited, and examples thereof include liquid phase mixing, a liquid phase reaction, gas-liquid mixing, a gas-liquid reaction, extraction, distillation, condensation, slurry mixing, solid phase extraction, separation and classification of particles, crystallization, cell culture, and the like. The sectional shape of the micro flow path is not particularly restricted and can be selected as appropriate according to an object. Examples thereof include circular, rectangular, semi-circular, triangular, and other shapes. In addition, the width and height that define a crosssectional area of the micro flow path are not particularly limited unless the effects of the present invention are impaired and can be selected as appropriate according to the object.

Fig. 3 is a diagram illustrating an example of the microfluidic device 10. Fig. 3 illustrates a plan view and a side view of the microfluidic device 10. The microfluidic device 10 includes a substrate 11 and a micro flow path 12 formed in the substrate 11. The substrate 11 illustrated in Fig. 3 is a plate-like member having a rectangular shape in plan view. However, the shape of the substrate 11 is not particularly limited. In addition, the material of the substrate 11 is not particularly limited, and glass, silicon, silica, quartz, resin, silicon carbide, or the like, for example, can be used.

Next, a form of the micro flow path 12 formed in the substrate 11 of the microfluidic device 10 will be described. Here, an example in which the microfluidic device 10 is applied as a microfluidic device reactor that mixes a plurality of dissimilar fluids to cause a reaction will be described. The micro flow path 12 of the microfluidic device 10 includes a first introduction flow path 13, a second introduction flow path 14, and a mixing and reaction flow path 15. The mixing and reaction flow path 15 is a micro flow path for mixing the plurality of dissimilar fluids to cause a reaction.

Arrows illustrated in Fig. 3 indicate flow directions when fluids flow along the micro flow path 12 of the microfluidic device 10. Here, an upstream side and a downstream side of the micro flow path 12 are defined using the flow directions when the fluids flow along the micro flow path 12 as a reference. Although the micro flow path 12 can be formed by subjecting the substrate 11 to etching processing, for example, a technique for forming the micro flow path 12 is not particularly limited. For example, in a case in which the substrate 11 has a two-layer structure, the micro flow path 12 can be formed in the substrate 11 by forming an open groove for forming the micro flow path 12 in a base substrate which is a first layer and then bonding a lid substrate which is a second layer so as to cover the open groove of the base substrate from above. In addition, examples of techniques for forming the micro flow path 12 other than etching include a machining method, a laser machining method, a molding method (an embossing method), and the like.

Supply ports 16 and 17 are provided at upstream ends of the first introduction flow path 13 and the second introduction flow path 14, respectively. The first introduction flow path 13 and the second introduction flow path 14 are supplied with fluids from the supply ports 16 and 17. The supply ports 16 and 17 can be considered to be acceptance ports that accept fluids supplied from the outside (outside the system) to the microfluidic device 10.

The first introduction flow path 13 and the second introduction flow path 14 join at a junction 18, and the junction 18 is further connected to an upstream end of the mixing and reaction flow path 15. Fluids supplied to the respective supply ports 16 and 17 join at the junction 18 after passing through the first introduction flow path 13 and the second introduction flow path 14, respectively, and they are mixed to cause a chemical reaction in a course of passing through the mixing and reaction flow path 15. Typically, fluids different in type (dissimilar fluids) are supplied to the first introduction flow path 13 (the supply port 16) and the second introduction flow path 14 (the supply port 17). Then, these dissimilar fluids join at the junction 18, and a chemical reaction of reactants contained in the fluids progresses while they are mixed in the course of flowing in the mixing and reaction flow path 15. Types of elements contained in the fluids supplied to the micro flow path 12 of the microfluidic device 10, the number of the types, and the like are not particularly limited.

Note that examples of the chemical reaction of reactants contained in the fluids include: a synthesis reaction such as a synthesis reaction of organic compounds, a synthesis reaction of inorganic compounds, and a synthesis reaction of organic-inorganic hybrid materials; as well as a decomposition reaction of an organic compound, a decomposition reaction of an inorganic compound, and a decomposition reaction of an organic-inorganic hybrid material; and the like.

In the example illustrated in Fig. 3, a discharge port 19 is formed at a downstream end of the mixing and reaction flow path 15. The discharge port 19 is an opening for discharging a fluid flowed in the micro flow path 12 of the microfluidic device 10 to the outside (outside the system).

A flow path width of the micro flow path 12 (the mixing and reaction flow path 15) is not particularly limited as long as it is on the order of micrometer. Examples thereof include an aspect of more than or equal to 25 µm and less than or equal to 500 µm, and an aspect of more than or equal to 100 µm and less than or equal to 500 µm is preferable. When the flow path width of the micro flow path 12 (the mixing and reaction flow path 15) is less than or equal to 500 µm, a decrease in mixing efficiency due to a cause such as elongation of a diffusion distance of molecules contained in fluids can be prevented. In addition, when the flow path width of the micro flow path 12 (the mixing and reaction flow path 15) is more than or equal to 100 µm, an excessive increase in pressure drop of a fluid flowing in the micro flow path 12 (the mixing and reaction flow path 15) can be prevented.

Note that as illustrated in the side view of Fig. 3, a heater 90 is provided on a lower surface of the substrate 11 in the microfluidic device 10. The heater 90 heats a fluid flowing in the micro flow path 12 (the mixing and reaction flow path 15) in the microfluidic device 10. In addition, a temperature sensor 91 is arranged on the lower surface of the substrate 11. The type of the heater 90 is not particularly limited, and a publicly-known heater such as an electric heater, for example, can be used. A chemical reaction of fluids flowing in the micro flow path 12 (the mixing and reaction flow path 15) can be promoted by, for example, heating the fluids flowing in the micro flow path 12 (the mixing and reaction flow path 15) to a reaction temperature range. Alternatively, the temperature sensor 91 may be a sensor in which a thermocouple is utilized, for example. Obviously, the temperature sensor 91 is not limited to a thermocouple, and examples thereof include a resistance temperature detector (RTD), a thermistor, and the like.

The microfluidic device 10 having the mixing and reaction flow path 15 as exemplified in Fig. 3 can be considered to be a microfluidic device reactor for mixing a plurality of dissimilar fluids and causing reaction elements contained in a mixed fluid of the plurality of dissimilar fluids to react. Reaction processes as unit operations performed on the microfluidic device reactor are not particularly limited, and examples thereof include slurry mixing and reaction, a liquid phase reaction, liquid phase mixing, a gas-liquid reaction, and the like.

In addition, in the example illustrated in Fig. 3, the mixing and reaction flow path 15 has a meandering shape in plan view. However, the shape of the micro flow path 12 (for example, the mixing and reaction flow path 15) is not particularly limited, and the aspect illustrated in Fig. 3 is an exemplification. In addition, the aspect of the micro flow path 12 illustrated in Fig. 3 is a mere exemplification of an aspect when two types of fluids are mixed to cause a reaction, and the number of introduction flow paths may be increased/decreased in accordance with the number of types of fluids to be supplied to the micro flow path 12.

In addition, the microfluidic device 10 does not need to be a microfluidic device reactor, and the form of the micro flow path 12 can be changed freely in accordance with the types of unit operations to be performed in the microfluidic device 10. For example, in a case in which there is no need to heat fluid flowing in the micro flow path 12 (the mixing and reaction flow path 15), installation of the heater 90 in the microfluidic device 10 may be omitted.

### <<Microfluidic Module>>

In Fig. 2, reference numerals 220 (220A, 220B, ..., 220J) are chip series units in the microfluidic module 200 (200A, 200B, 200C). The microfluidic module 200 (200A, 200B, 200C) in the present embodiment includes a plurality of chip series units 220, each at least including the plurality of microfluidic devices 10 connected in series to one another, and the plurality of chip series units 220 are connected in parallel to one another. The expression "connected" stated here means being connected fluidically. In other words, the chip series unit 220 of the microfluidic module 200 at least includes a portion in which the plurality of microfluidic devices 10 are connected fluidically in series. The meaning of "at least includes" stated here means that the chip series unit 220 should only include a portion in which the plurality of microfluidic devices 10 are connected in series to one another and that the chip series unit may partially include a portion (segment) in which the microfluidic devices 10 are connected in parallel to one another. Note that the microfluidic module 200 according to the present embodiment should only have the plurality of chip series units 220 connected in parallel, and in this respect, the number of the chip series units 220 is not particularly limited. For example, the chip series units 220 provided for the microfluidic module 200 may be a multiple of two or a multiple of three. For example, the number (parallel number) of the chip series units 220 provided for the microfluidic module 200 may be more than or equal to two, more than or equal to four, more than or equal to six, or more than or equal to eight. Alternatively, the number (parallel number) of the chip series units 220 provided for the microfluidic module 200 may be 2^{m} × 3ⁿ (m and n are integers of more than or equal to 0). In this case, m ≥ 3 may hold in a case in which m + n ≥ 2 and n = 0 hold. The parallel number of the chip series units 220 in the microfluidic module 200 can be set as appropriate in accordance with raw materials to be supplied to the microfluidic devices 10 by the supply apparatus 300, the types of unit operations to be performed by the microfluidic devices 10, and the like.

In Fig. 2, a group of the microfluidic devices 10 belonging to each of the chip series units 220 (220A, 220B, ..., 220J) is enclosed by a dash-dot-dot line. In the example illustrated in Fig. 2, each of the chip series units 220 (220A, 220B, ..., 220J) is formed by four microfluidic devices 10 connected fluidically in series. In the example illustrated in Fig. 2, the four microfluidic devices 10 included in each of the chip series units 220 (220A, 220B, ..., 220J) along the lengthwise direction on the plane of the board 210 are arranged linearly. In addition, the respective chip series units 220 (220A, 220B, ..., 220J) are arranged so as to adjoin mutually along the lateral direction of the board 210. Note that the respective directions (the lengthwise direction and the lateral direction) on the board 210 are merely used for convenience for describing the board 210.

In the example illustrated in Fig. 1, the chip series unit 220 is formed by the four microfluidic devices 10 connected in series. In addition, in the example illustrated in Fig. 1, the four microfluidic devices 10 constituting the chip series unit 220 are arrayed linearly on the board 210. However, the number of the microfluidic devices 10 (for example, the number of the microfluidic devices 10 connected in series) included in the chip series unit 220, an array pattern on the board 210, and the like are not particularly limited.

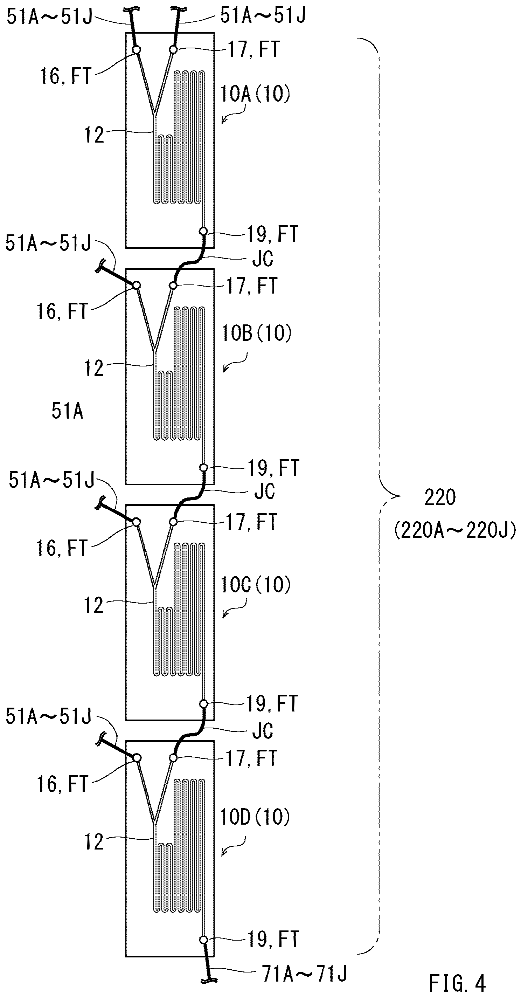

Next, with reference to Fig. 4, a series connection aspect of the microfluidic devices 10 in each of the chip series units 220 will be described. Fig. 4 is a diagram describing the chip series unit 220. In Fig. 4, four microfluidic devices 10 indicated by reference numerals 10A to 10D are sequentially connected in series. Among the plurality of microfluidic devices 10 included in the chip series unit 220, a device located on the frontmost stage (an uppermost stage, most upstream) using the series relationship as a reference will be called a "first stage", and the remaining devices will be sequentially called a "second stage", a "third stage", ... toward a subsequent stage side (a downstream side). In other words, in the example illustrated in Fig. 4, the microfluidic device 10A on the "first stage" (the frontmost stage) to the microfluidic device 10D on the "fourth stage" (the last stage) are sequentially connected fluidically in series.

Specifically, the discharge port 19 located at the downstream end of the micro flow path 12 in the microfluidic device 10A on the first stage (the frontmost stage) and the supply port 17 located at the upstream end of the micro flow path 12 in the microfluidic device 10B on the second stage are connected via a coupling conduit JC. The coupling conduit JC has an inner flow path for circulating a fluid.

Reference numerals FT in the drawing are joints attached to the supply ports 16, 17 and the discharge port 19 of the microfluidic device 10, and a one-touch joint such as a tube fitting, for example, may be employed. An inner flow path in the coupling conduit JC or various conduits which will be described later and the micro flow path 12 can be caused to communicate (can be connected) liquid-tightly and airtightly via the joint FT. The type of the above-described conduit is not particularly limited and may be a flexible tube. The conduit may be formed of polyetheretherketone (PEEK) resin, for example.

The discharge port 19 in the microfluidic device 10B on the second stage and the supply port 17 in the microfluidic device 10C on the third stage are connected via the coupling conduit JC (and the joint FT). Similarly, the discharge port 19 in the microfluidic device 10C on the third stage and the supply port 17 in the microfluidic device 10D on the fourth stage are connected via the coupling conduit JC (and the joint FT). As described above, the four microfluidic devices 10A to 10D constituting each of the chip series units 220 are sequentially connected fluidically in series.

The microfluidic device 10 on the second or subsequent stage is supplied with a fluid (a fluid having been subjected to unit operation processing) after predetermined unit operation processing is performed in the microfluidic device 10 located on an immediately preceding stage (an immediately superior stage) from the microfluidic device 10 located on the immediately preceding stage (the immediately superior stage). In the chip series unit 220 in the present embodiment, the fluid having been subjected to unit operation is sequentially transferred to the microfluidic device 10 located on an immediately subsequent stage (an immediately inferior stage) other than the microfluidic device 10 on the last stage (the lowermost stage).

When a segment (region) of the micro flow path 12 in the microfluidic device 10 in which a unit operation on a fluid is performed is called a "processing flow path segment", the mixing and reaction flow path 15 is equivalent to the processing flow path segment in the configuration example illustrated in Fig. 3. A concept of supposing the "processing flow path segment" (the mixing and reaction flow path 15) in each of the microfluidic devices 10 included in the chip series unit 220 as a flow path is called a "processing flow path portion". That is to say, in the example illustrated in Fig. 4, the processing flow path portion can be regarded as a flow path in which respective processing flow path segments (the mixing and reaction flow paths 15) on the "first stage" (the frontmost stage), the "second stage", the "third stage", and the "fourth stage" (the last stage) from the upstream side are sequentially coupled.

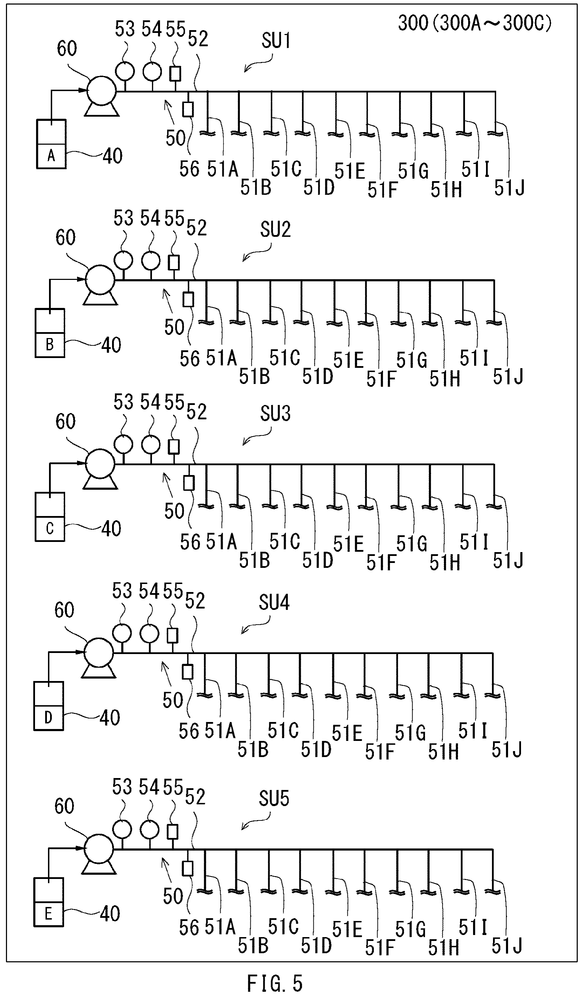

Next, the supply apparatus 300 in the system 1 will be described. Fig. 5 is a diagram describing the supply apparatus 300 in the system 1. The system 1 includes supply apparatuses 300A, 300B, and 300C respectively corresponding to the microfluidic modules 200A, 200B, and 200C, for example, and can supply fluids as raw materials to each of the microfluidic modules 200A, 200B, and 200C. The supply apparatuses 300A to 300C have substantially an identical configuration.

The supply apparatus 300 (300A to 300C) will be described with reference to Fig. 5. In the example illustrated in Fig. 5, the supply apparatus 300 has a first supply unit SU1 to a fifth supply unit SU5. The first supply unit SU1 is a unit for supplying a first raw material A to each of the chip series units 220A to 220J of the microfluidic module 200. The second supply unit SU2 is a unit for supplying a second raw material B to each of the chip series units 220A to 220J of the microfluidic module 200. The third supply unit SU3 is a unit for supplying a third raw material C to each of the chip series units 220A to 220J of the microfluidic module 200. The fourth supply unit SU4 is a unit for supplying a fourth raw material D to each of the chip series units 220A to 220J of the microfluidic module 200. The fifth supply unit SU5 is a unit for supplying a fifth raw material E to each of the chip series units 220A to 220J of the microfluidic module 200. The types of the first raw material A to the fifth raw material E are not particularly limited, and raw materials appropriate for the kinds of unit operations in the microfluidic devices 10 included in the chip series units 220A to 220J may be employed. In addition, the first raw material A to the fifth raw material E do not need to be raw materials different from one another, and some or all of them may be the same raw material. In addition, as each type of the raw materials A to E, a single type of a raw material fluid may be retained, or a mixed fluid obtained by mixing two or more types of raw material fluids may be retained.

The first supply unit SU1 is a unit that supplies the first raw material A to the supply port 16 of the microfluidic device 10A on the first stage in each of the chip series units 220. The second supply unit SU2 is a unit that supplies the second raw material B to the supply port 17 of the microfluidic device 10A on the first stage in each of the chip series units 220. The third supply unit SU3 is a unit that supplies the third raw material C to the supply port 16 of the microfluidic device 10B on the second stage in each of the chip series units 220. The fourth supply unit SU4 is a unit that supplies the fourth raw material D to the supply port 16 of the microfluidic device 10C on the third stage in each of the chip series units 220. The fifth supply unit SU5 is a unit that supplies the fifth raw material E to the supply port 16 of the microfluidic device 10D on the fourth stage in each of the chip series units 220.

Hereinafter, details of each of the supply units SU1 to SU5 will be described. The first supply unit SU1 includes a raw material tank 40 that stores the first raw material A, a supply conduit 50, a pump 60, and the like. The supply conduit 50 is connected to the pump 60, and when the pump 60 is activated, the first raw material A stored in the raw material tank 40 is pumped (for example, sent) to the supply conduit 50, and the first raw material A flows in the supply conduit 50 from upstream toward the downstream side. The type of the pump 60 is not particularly limited, and examples thereof include a syringe pump, a diaphragm pump, and the like. Divergent branch conduits 51A to 51J diverge from the supply conduit 50 on the way. The divergent branch conduits 51A to 51J are provided by a number corresponding to the chip series units 220A to 220J included in each of the microfluidic modules 200, and the ten divergent branch conduits 51A to 51J diverge from the supply conduit 50 in the example illustrated in Fig. 5. In addition, as illustrated in Fig. 5, divergent positions of the respective divergent branch conduits 51A to 51J diverging from the supply conduit 50 are respectively shifted in position. Hereinafter, a segment of the supply conduit 50 on the upstream side of a divergent portion located on the most upstream side will be called a main stream conduit portion 52. Note that in a case in which the divergent branch conduits 51A to 51J are not particularly distinguished, they will simply be called a "divergent branch conduit 51" in some cases.

Each downstream end of the divergent branch conduits 51A to 51J in the first supply unit SU1 is connected to the supply port 16 (for example, the joint FT provided at the supply port 16) of the microfluidic device 10A on the first stage in each of the chip series units 220A to 220J. The first raw material A distributed from the main stream conduit portion 52 of the supply conduit 50 in the first supply unit SU1 to each of the divergent branch conduits 51A to 51J is supplied to the supply port 16 of the microfluidic device 10A on the first stage in each of the chip series units 220A to 220J through each of the divergent branch conduits 51A to 51J. That is to say, the first raw material A can be supplied in parallel to the respective chip series units 220A to 220J through the divergent branch conduits 51A to 51J in the first supply unit SU1. In more detail, the supply ports 16 (the first introduction flow paths 13) of the microfluidic devices 10A on the first stage in the respective chip series units 220A to 220J are connected fluidically in parallel to one another via the divergent branch conduits 51A to 51J in the first supply unit SU1, and the first raw material A can be supplied to each of the supply ports 16 (the first introduction flow paths 13) of the microfluidic devices 10A on the first stage connected in parallel.

In addition, in the example illustrated in Fig. 5, the main stream conduit portion 52 in the supply conduit 50 is provided with an on-off valve 53, a flow rate adjustment valve 54, a flow rate sensor 55, and a pressure sensor 56. The on-off valve 53 is a valve that opens/closes a flow path of the main stream conduit portion 52 in the supply conduit 50. The on-off valve 53 is not particularly limited, and a normally open electromagnetic on-off valve or the like can be used, for example. The flow rate adjustment valve 54 is a valve that adjusts a flow rate of a raw material (fluid) flowing in the main stream conduit portion 52 in the supply conduit 50. The type of the flow rate adjustment valve 54 is not particularly limited and may be an electromagnetic valve capable of freely changing an opening degree of a flow path section of the main stream conduit portion 52, for example. The flow rate sensor 55 is a sensor that measures the flow rate of a raw material (fluid) flowing in the main stream conduit portion 52 in the supply conduit 50. The pressure sensor 56 is a sensor that measures a pressure in the main stream conduit portion 52 in the supply conduit 50.

The other supply units SU2 to SU5 in the supply apparatus 300 (300A to 300C) are also common to the first supply unit SU1 in terms of a substantial structure and include the raw material tank 40, the supply conduit 50 (the divergent branch conduits 51A to 51J, the main stream conduit portion 52), the pump 60, and the like. The second raw material B to the fifth raw material E are respectively retained in the raw material tanks 40 in the supply units SU2 to SU5. Note that each downstream end of the divergent branch conduits 51A to 51J in the second supply unit SU2 is connected to the supply port 17 (for example, the joint FT provided at the supply port 17) of the microfluidic device 10A on the first stage in each of the chip series units 220A to 220J. That is to say, the supply ports 17 (the second introduction flow paths 14) in the microfluidic devices 10A on the first stage in the respective chip series units 220A to 220J are connected fluidically in parallel to one another via the divergent branch conduits 51A to 51J in the second supply unit SU2, and the second raw material B can be supplied in parallel to each of the supply ports 17 (the second introduction flow paths 14) of the microfluidic devices 10A on the first stage connected in parallel.

Similarly, each downstream end of the divergent branch conduits 51A to 51J in the third supply unit SU3 is connected to the supply port 16 (for example, the joint FT provided at the supply port 16) of the microfluidic device 10B on the second stage in each of the chip series units 220A to 220J. That is to say, the supply ports 16 (the first introduction flow paths 13) in the microfluidic devices 10B on the second stage in the respective chip series units 220A to 220J are connected fluidically in parallel to one another via the divergent branch conduits 51A to 51J in the third supply unit SU3, and the third raw material C can be supplied in parallel to each of the supply ports 16 (the first introduction flow paths 13) of the microfluidic devices 10B on the second stage connected in parallel.

Each downstream end of the divergent branch conduits 51A to 51J in the fourth supply unit SU4 is connected to the supply port 16 (for example, the joint FT provided at the supply port 16) of the microfluidic device 10C on the third stage in each of the chip series units 220A to 220J. That is to say, the supply ports 16 (the first introduction flow paths 13) in the microfluidic devices 10C on the third stage in the respective chip series units 220A to 220J are connected fluidically in parallel to one another via the divergent branch conduits 51A to 51J in the fourth supply unit SU4, and the fourth raw material D can be supplied in parallel to each of the supply ports 16 (the first introduction flow paths 13) of the microfluidic devices 10C on the third stage connected in parallel.

Each downstream end of the divergent branch conduits 51A to 51J in the fifth supply unit SU5 is connected to the supply port 16 (for example, the joint FT provided at the supply port 16) of the microfluidic device 10D on the fourth stage in each of the chip series units 220A to 220J. That is to say, the supply ports 16 (the first introduction flow paths 13) in the microfluidic devices 10D on the fourth stage in the respective chip series units 220A to 220J are connected fluidically in parallel to one another via the divergent branch conduits 51A to 51J in the fifth supply unit SU5, and the fifth raw material E can be supplied in parallel to each of the supply ports 16 (the first introduction flow paths 13) of the microfluidic devices 10D on the fourth stage connected in parallel.

As described above, the respective microfluidic devices 10A to 10D are sequentially connected in series in each of the chip series units 220A to 220J in the microfluidic module 200. In addition, in terms of the relationship with one another among the chip series units 220A to 220J, the microfluidic devices 10 of the respective chip series units 220A to 220J (the microfluidic devices 10A to one another, 10B to one another, 10C to one another, and 10D to one another) are connected in parallel to one another through the divergent branch conduit 51 via the respective supply units SU1 to SU5.

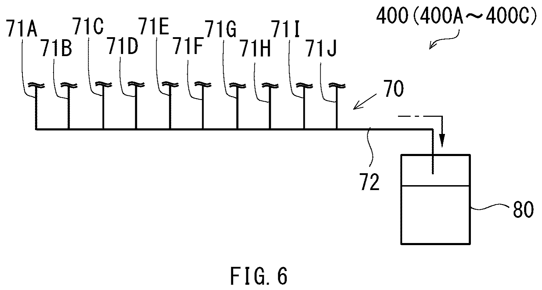

Next, the collection apparatus 400 in the system 1 will be described. The system 1 includes collection apparatuses 400A, 400B, and 400C respectively corresponding to the microfluidic module 200A, 200B, and 200C, for example, and can collect a product from each of the microfluidic modules 200A, 200B, and 200C. Fig. 6 is a diagram describing the collection apparatus 400 in the system 1. The collection apparatuses 400A to 400C have substantially an identical configuration.

As illustrated in Fig. 6, the collection apparatus 400 (400A to 400C) includes a collection conduit 70 for collecting a product from each of the chip series units 220A to 220J of the microfluidic module 200. The collection conduit 70 has divergent branch conduits 71A to 71J and a main stream conduit portion 72. The divergent branch conduits 71A to 71J are provided by a number corresponding to the chip series units 220A to 220J included in the microfluidic module 200 and their downstream ends are connected to the main stream conduit portion 72. That is to say, the divergent branch conduits 71A to 71J join the main stream conduit portion 72 at the downstream ends. In addition, respective divergent positions at which the divergent branch conduits 71A to 71J join the main stream conduit portion 72 are shifted in position from one another. Each upstream end of each of the divergent branch conduits 71A to 71J is connected to the discharge port 19 (for example, the joint FT provided at the discharge port 19) of the microfluidic device 10D on the fourth stage (the last stage) in each of the chip series units 220A to 220J. Note that in a case in which the divergent branch conduits 71A to 71J are not particularly distinguished, they will simply be called a "divergent branch conduit 71" in some cases.

In each of the chip series units 220A to 220J of the microfluidic module 200, a product (fluid) flows into the divergent branch conduits 71A to 71J from the discharge port 19 of the microfluidic device 10D located on the fourth stage (the last stage). The product flowed into the divergent branch conduits 71A to 71J then flows into the main stream conduit portion 72 of the collection conduit 70. The collection apparatus 400 includes a collection tank 80 for retaining a product collected from the microfluidic module 200 through the collection conduit 70, and the above-described collected product is retained in the collection tank 80.

Next, the control apparatus 500 will be described. The control apparatus 500 can communicate with the on-off valve 53, the flow rate adjustment valve 54, the flow rate sensor 55, the pressure sensor 56, the pump 60, the heater 90, the temperature sensor 91, and the like of each of the supply units SU1 to SU5 mentioned above by wire or wirelessly. The control apparatus 500 receives a state signal output from the flow rate sensor 55, the pressure sensor 56, the temperature sensor 91, or the like and based on a result of reception of the state signal, outputs a control signal for controlling the on-off valve 53, the flow rate adjustment valve 54, the pump 60, the heater 90, or the like.

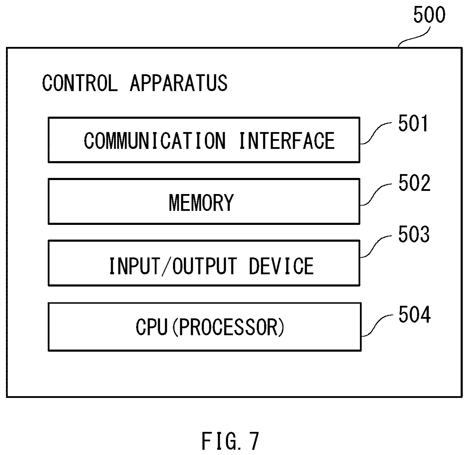

Fig. 7 is a block diagram illustrating an example of a configuration of the control apparatus 500. The control apparatus 500 may be a general computer. The control apparatus 500 includes a communication interface (I/F) 501, a memory 502, an input/output device 503, and a processor 504. The communication I/F 501 may be a network card or a communication module, for example, and communicates with another computer based on a predetermined protocol. The memory 502 may be a main memory such as a RAM (Random Access Memory) or a ROM (Read Only Memory) or an auxiliary memory (a secondary memory) such as a HDD (Hard-Disk Drive), a SSD (Solid State Drive), or a flash memory. The main memory temporarily stores a program to be read out by the processor 504 and information to be transmitted/received to/from other computers, and ensures a workspace of the processor 504. The auxiliary memory stores a program to be executed by the processor 504, information to be transmitted/received to/from other computers, and the like. The input/output device 503 is a user interface such as, for example, an input device such as a keyboard or a mouse, an output device such as a monitor, and an input/output device such as a touch panel. The processor 504 is an arithmetic processing device such as a CPU (Central Processing Unit) and executes a program.

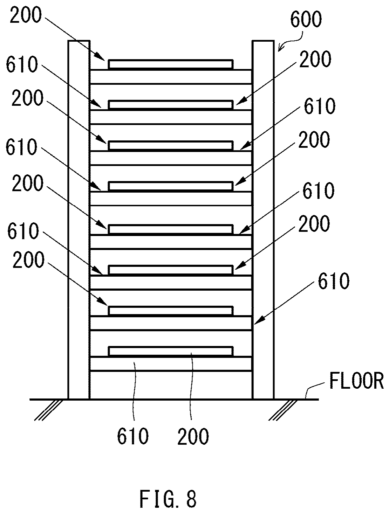

Fig. 8 is a view describing an example of setting the microfluidic module 200. In the example illustrated in Fig. 8, the plurality of microfluidic modules 200 having the chip-on-board form are arranged on a rack 600 in multiple stages. The rack 600 has a plurality of support frames 610 for installing the microfluidic modules 200, and the microfluidic module 200 can be placed on the support frame 610. The microfluidic module 200 is installed on the support frame 610 at such an attitude that a mounting surface of the microfluidic device 10 faces upward in the state in which the microfluidic module 200 is installed on the support frame 610, for example, in other words, such that a non-mounting surface of the microfluidic device 10 faces the support frame 610 side. Then, in the example illustrated in Fig. 8, the plurality of microfluidic modules 200 are arranged on the rack 600 in multiple stages such that the planes of the boards 210 of the microfluidic modules 200 have a substantially horizontal attitude.

Note that a moderate clearance is formed between the respective microfluidic modules 200 stacked in the up-down direction in the state in which the plurality of microfluidic modules 200 are installed on the rack 600. In other words, the plurality of microfluidic modules 200 are installed on the rack 600 so as to be stacked with a clearance left in the up-down direction. Obviously, such an installation mode of the microfluidic modules 200 is an example, and various installation modes can be employed.

Next, activation content of the system 1 will be described. When the control apparatus 500 of the system 1 controls various instruments (such as the pump 60, the on-off valve 53, and the flow rate adjustment valve 54) included in the supply apparatus 300, raw material supply to each of the chip series units 220 in each of the microfluidic modules 200 is performed by each of the supply units SU1 to SU5. In a normal operational state of the system 1, raw material supply by each of the supply units SU1 to SU5 is performed continuously.

In other words, the first raw material A and the second raw material B are continuously supplied respectively to the supply port 16 (the first introduction flow path 13) and the supply port 17 (the second introduction flow path 14) of the microfluidic device 10A on the first stage in each of the chip series units 220A to 220J by the first supply unit SU1 and the second supply unit SU2 of the supply apparatus 300. As described above, the supply ports 16 (the first introduction flow paths 13) of the microfluidic devices 10A on the first stage in the respective chip series units 220A to 220J are connected fluidically in parallel to one another via the divergent branch conduits 51A to 51J in the first supply unit SU1, and the supply ports 17 (the second introduction flow paths 14) are connected fluidically in parallel to one another via the divergent branch conduits 51A to 51J in the first supply unit SU1. Therefore, the first raw material A and the second raw material B can be supplied respectively to the supply ports 16 (the first introduction flow paths 13) and the supply ports 17 (the second introduction flow paths 14) of the microfluidic devices 10A on the first stage connected in parallel mutually among the chip series units 220A to 220J.

The first raw material A and the second raw material B supplied to the microfluidic device 10A on the first stage in each of the chip series units 220A to 220J join at the junction 18 of the microfluidic device 10A and flow into the mixing and reaction flow path 15. Then, the first raw material A and the second raw material B flowed into the mixing and reaction flow path 15 of the microfluidic device 10A on the first stage are mixed by diffusive mixing in which the mixing and reaction flow path 15 serves as a mixing field. The heater 90 is provided adjacent to each of the microfluidic devices 10A to 10D. Therefore, a mixed fluid of the first raw material A and the second raw material B flowing in the mixing and reaction flow path 15 in the microfluidic device 10A on the first stage flows in the mixing and reaction flow path 15 in a state heated to a reaction temperature range by the heater 90. This promotes a chemical reaction of reaction elements contained in the first raw material A and the second raw material B, so that a reaction product is produced.

Here, in a case in which the quantity of devices connected fluidically in series among the microfluidic devices 10 constituting each of the chip series units 220A to 220J is supposed to be N (N being an integer of more than or equal to two), a k-th (k being an integer of more than or equal to one and less than or equal to N) microfluidic device 10 from the upstream side is denoted by a microfluidic device 10k. In addition, a mixed fluid containing a reaction product produced in the mixing and reaction flow path 15 of the microfluidic device 10k will be called a "k-th produced fluid" in some cases. Note that N is 4 in the example illustrated in Fig. 4.

The microfluidic devices 10 constituting each of the chip series units 220A to 220J are connected in series via the coupling conduits JC as described above. Therefore, a mixed fluid (in other words, a first produced fluid) in which a produced reactant produced in the mixing and reaction flow path 15 in the microfluidic device 10A on the first stage and the first raw material A and the second raw material B which remain are mixed is discharged from the discharge port 19 of the microfluidic device 10A on the first stage and is supplied to the supply port 17 of the microfluidic device 10B on the second stage coupled to the immediately subsequent stage (immediately downstream) through the coupling conduit JC. Then, the first produced fluid supplied from the microfluidic device 10A on the first stage flows into the mixing and reaction flow path 15 in the microfluidic device 10B on the second stage, and a reaction process of reaction elements contained in the mixed fluid further progresses in the course of flowing in the mixing and reaction flow path 15. As described above, a reaction process as an example of the unit operation is performed in the course of sequentially flowing from the upstream side to the downstream side in the processing flow path segments in the chip series units 220A to 220J. Then, an N-th produced fluid containing a reaction product produced in the mixing and reaction flow path 15 of a microfluidic device 10N (the microfluidic device 10D on the fourth stage) on the last stage (most downstream) in each of the chip series units 220A to 220J is finally collected (retained) to (in) the collection tank 80 by the collection apparatus 400.

The system 1 according to the present embodiment enables the reaction process of the reaction elements contained in the mixed fluid to progress in the micro flow paths 12 (the mixing and reaction flow paths 15) of the microfluidic devices 10 constituting each of the chip series units 220A to 220J and connected mutually in series to obtain a desired reaction product. On that occasion, the reaction process in the mixing and reaction flow path 15 can be controlled successively, accurately, and finely for each of the microfluidic devices 10 since the respective microfluidic devices 10 in each of the chip series units 220A to 220J are connected in series to one another. The reaction process in the mixing and reaction flow path 15 can be controlled accurately and finely by, for example, individually setting a temperature to which a fluid is to be heated by the heater 90, or the like for each of the microfluidic devices 10. Note that the temperature to which a fluid is to be heated by the heater 90 may be set individually for each of the chip series unit 220 or for each of the microfluidic devices 10 included in the chip series unit 220. In addition, the temperature to which a fluid is to be heated by the heater 90 may be changed in accordance with the arrangement pattern of the microfluidic devices 10 mounted on the board 210 of the microfluidic module 200.

Furthermore, in the system 1 according to the present embodiment, raw materials containing reaction elements can also be supplied continuously by the supply units SU3 to SU5 to the microfluidic devices 10B to 10D located on the second and subsequent stages in each of the chip series units 220A to 220J. That is to say, the raw materials C to E can be additionally supplied (additionally introduced) on the way of the processing flow path segment in the chip series units 220A to 220J.

Here, when the microfluidic devices 10B to 10D on the second and subsequent stages among the microfluidic devices 10 constituting each of the chip series units 220 (220A to 220J) are denoted by reference numerals 10p (p being an integer of more than or equal to two and less than N) as well, the supply ports 16 (the first introduction flow paths 13) of the microfluidic devices 10p on the second and subsequent stages are connected fluidically in parallel to one another via the divergent branch conduits 51A to 51J in the supply units SU3 to SU5. Therefore, the third raw material C to the fifth raw material E can be continuously and additionally supplied respectively to the supply ports 16 (the first introduction flow paths 13) of the microfluidic devices 10p on the second and subsequent stages connected mutually in parallel among the chip series units 220A to 220J. Note that a mixed fluid containing reaction products produced in the mixing and reaction flow paths 15 of the microfluidic devices 10p will be called a "p-th mixed fluid" in some cases.

For example, the first raw material A and the second raw material B supplied to the microfluidic device 10A on the first stage are partially consumed in the course in which the reaction process is performed along the processing flow path segment of each of the chip series units 220A to 220J. In contrast to this, with the microfluidic module 200 according to the present embodiment, raw materials to be used in the unit operation can also be supplied successively and additionally (additively) to the microfluidic device 10p located on the second or subsequent stage of each of the chip series units 220A to 220J. The raw materials C to E additionally supplied to the supply port 16 (the first introduction flow path 13) of the microfluidic device 10p located on the second or subsequent stage join a (p-1)-th produced fluid supplied from a microfluidic device 10(p-1) located on the immediately preceding stage (immediately upstream) to the second introduction flow path 14 at the junction 18 and flow into the mixing and reaction flow path 15. The reaction process in the mixing and reaction flow path 15 can be promoted by additionally supplying reaction raw materials to the (p-1)-th produced fluid supplied from the microfluidic device 10(p-1) on the immediately preceding stage (immediately upstream) in the microfluidic device 10p located on the second or subsequent stage. As a result, the reaction product collected by the collection apparatus 400 is easily stabilized in quality, and yield of a reaction product can be increased.

Obviously, various alterations can be made in the system 1 according to the present embodiment, and it is not necessary to perform additional raw material supply to at least some of the microfluidic devices 10p located on the second and subsequent stages of each of the chip series units 220A to 220J. In addition, also in one chip series unit 220, a unit operation may be performed in some of the microfluidic devices 10 coupled in series, the unit operation being different from that in the other microfluidic devices 10. As described above, with the microfluidic module 200 according to the present embodiment, the types of unit operations to be performed as chemical/physical processes are not particularly limited either among the plurality of chip series units 220 or among the plurality of microfluidic devices 10 included in one chip series unit 220. In addition, it is needless to say that various alterations can also be made to aspects of the supply apparatus 300 of the system 1, the micro flow path 12 in the microfluidic device 10, and the like so as to be suited to unit operations to be performed in the micro flow path 12.

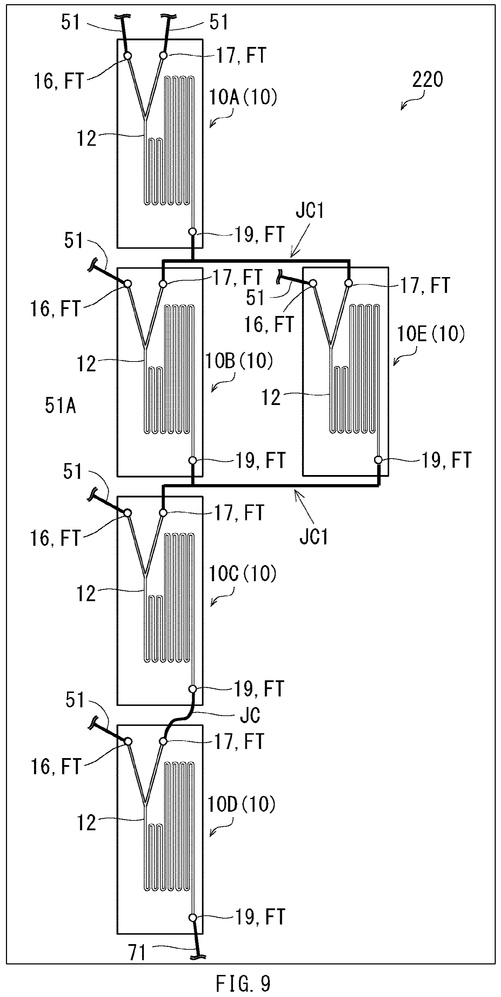

In addition, various aspects can be employed for the chip series unit 220 in the present embodiment as long as it at least includes a portion in which the plurality of microfluidic devices 10 are connected fluidically in series. Fig. 9 is a diagram describing a modification example of the chip series unit 220. In the modification example illustrated in Fig. 9, the chip series unit 220 partially includes a portion (segment) in which the microfluidic devices 10 are connected in parallel to one another. The example illustrated in Fig. 9 is different from the aspect illustrated in Fig. 4 in that the chip series unit 220 includes the microfluidic devices 10A to 10E and in that the microfluidic device 10E is connected in parallel to the microfluidic device 10B on the "second stage" within the system of the chip series unit 220.

In the example illustrated in Fig. 9, the supply port 17 in the microfluidic device 10B and the supply port 17 in the microfluidic device 10E are connected to the discharge port 19 in the microfluidic device 10A on the first stage (the frontmost stage) via a parallel coupling conduit JC1. Similarly, the discharge port 19 in the microfluidic device 10B and the discharge port 19 in the microfluidic device 10E are connected to the supply port 17 in the microfluidic device 10A on the third stage via the parallel coupling conduit JC1. In the aspect illustrated in Fig. 9, both the microfluidic device 10B and the microfluidic device 10E can be considered to be a microfluidic device on the "second stage". Note that in the case in which the chip series unit 220 partially includes a parallel segment in which the microfluidic devices 10 are connected in parallel to each other, the parallel segment, a parallel position, the number of chips connected in parallel, and the like are not particularly limited. That is to say, three or more microfluidic devices 10 may be connected in parallel in the parallel segment. Alternatively, the plurality of microfluidic devices 10 may be connected in series in the parallel segment. For example, in Fig. 9, a further microfluidic device 10F (not illustrated) may be connected in series to an immediately subsequent stage of the microfluidic device 10E, and the discharge port 19 of the microfluidic device 10F may be connected to the supply port 17 in the microfluidic device 10D via the parallel coupling conduit JC1. In this case, the discharge port 19 in the microfluidic device 10C and the discharge port 19 in the microfluidic device 10F may be connected to the supply port 17 in the microfluidic device 10D on the fourth stage, for example, via the parallel coupling conduit JC1.

In addition, an example in which the coupling conduit JC that couples the microfluidic devices 10 mounted on the microfluidic module 200 to each other is constituted by a tube member other than the microfluidic devices 10 has been described in the above-described embodiment, but this is not a limitation. For example, the micro flow paths 12 (microchannels) of the plurality of microfluidic devices 10, flow paths (channels) that connect the micro flow paths 12 of the respective microfluidic devices 10 to one another, and the like may be formed within the board 210 (substrate) of the microfluidic module 200. That is to say, the microfluidic module 200 may be entirely constructed of a single substrate. In the case of this aspect, part (for example, the divergent branch conduit 51) of the supply conduit 50 and part (for example, the divergent branch conduit 71) of the collection conduit 70 may be formed by flow paths (channels) formed in the substrate of the microfluidic module 200. On that occasion, the substrate of the microfluidic module 200 may have a multiple-layer structure, and a layer that forms the micro flow paths 12 of the respective microfluidic devices 10 and a layer that forms the flow paths corresponding to the divergent branch conduit 51 and the divergent branch conduit 71 may be formed as layers different from each other.

In addition, the microfluidic module 200 illustrated in Fig. 1, Fig. 2, and the like has the board form in which the plurality of microfluidic devices 10 included in the microfluidic module 200 are mounted on the board 210, but this is not a limitation. In other words, the microfluidic module 200 should only include the plurality of chip series units 220 connected mutually in parallel, and an aspect thereof is not particularly limited. For example, the microfluidic module 200 may not include the board 210. In this case, the micro flow paths 12 of the microfluidic devices 10 connected mutually in series should only be connected fluidically to one another via the coupling conduits JC.

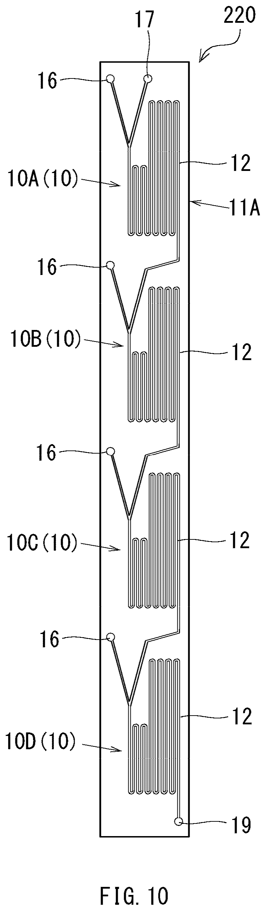

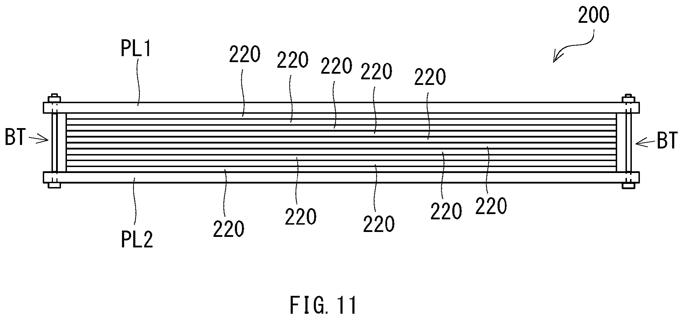

For example, as illustrated in Fig. 10, the microfluidic module 200 having a block form may be constructed by collectively forming the micro flow paths 12 of the plurality of microfluidic devices 10 constituting each of the chip series units 220 included in the microfluidic module 200 on a substrate 11A and stacking the chip series units 220 having such a chip form (see Fig. 11). Note that the chip series unit 220 having the chip form exemplified in Fig. 10 has the micro flow paths 12 corresponding to the respective microfluidic devices 10 connected in series. In addition, the micro flow path 12 in the microfluidic device 10A on the first stage (most upstream) has the supply ports 16 and 17, and the micro flow path 12 in the microfluidic device 10D on the fourth stage (most downstream) has the supply port 16 and the discharge port 19. The microfluidic devices 10B and 10C located intermediately have the supply ports 16. Note that the supply ports 16, 17 and the discharge port 19 in each of the chip series units 220 are formed as through-holes extending through the substrate 11A in a thickness direction. In addition, in Fig. 10, the number of the microfluidic devices 10 connected in series should only be plural.

Then, in the microfluidic module 200 having the block form exemplified in Fig. 11, a plurality of the chip series units 220 having the chip form illustrated in Fig. 10 are stacked. In Fig. 11, the ten chip series units 220 having the chip form are stacked, and they are held in a state sandwiched by a pair of holding plates (an upper holding plate PL1 and a lower holding plate PL2). Obviously, the number of the chip series units 220 held between the upper holding plate PL1 and the lower holding plate PL2 should only be plural. For example, the upper holding plate PL1 and the lower holding plate PL2 are flat plates having a rectangular shape with bolt insertion holes formed in appropriate places (for example, the four corners of the plane) and are fastened with appropriate fasteners BT in which bolts, nuts, and the like are combined as appropriate.

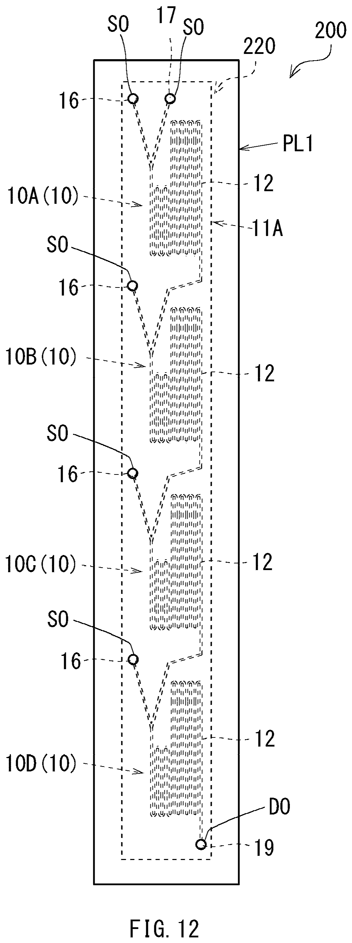

Fig. 12 is a top view of the microfluidic module 200 having the block form. In the depicted microfluidic module 200, openings (the supply ports 16 and 17, the discharge port 19, and the like) in the micro flow paths 12 of the microfluidic devices 10 included in each of the chip series units 220 are continuous in the up-down direction among the stacked chip series units 220. For example, the microfluidic devices 10A on the first stage (most upstream) have their supply ports 16 arranged at positions mutually overlapped among the respective chip series units 220 and their supply ports 17 arranged at positions mutually overlapped among the respective chip series units 220, and the supply ports 16 of the microfluidic devices 10A in the respective chip series units 220 are connected mutually in parallel to one another, and the supply ports 17 are connected mutually in parallel to one another. Similarly, the microfluidic devices 10B (the same applies to 10C) in the respective chip series units 220 have their supply ports 16 connected mutually in parallel to one another. Similarly, the microfluidic devices 10D on the fourth stage (most downstream) in the respective chip series units 220 have their supply ports 16 connected mutually in parallel to one another and their discharge ports 19 connected mutually in parallel. Then, in the upper holding plate PL1, supply ports SO are formed at positions to be overlapped on the respective supply ports 16, 17 in the respective chip series units 220, and a discharge port DO is formed at a position to be overlapped on each of the discharge ports 19. With such a configuration, fluids as raw materials can be supplied to the respective supply ports 16 and 17 in the respective chip series units 220 from the respective supply ports SO in the upper holding plate PL1, and a product from each of the discharge ports 19 in each of the chip series units 220 can be collected from the discharge port DO. In addition, with such a configuration, the supply ports 16 in the respective chip series units 220 directly communicate with one another without the interposition of a tube or the like, the supply ports 17 directly communicate with one another without the interposition of a tube or the like, and the respective discharge ports 19 directly communicate with one another without the interposition of a tube or the like. Therefore, raw materials can be supplied to the respective supply ports 16 (17) in the respective chip series units 220 through a single supply conduit without the interposition of the divergent branch conduit 51 described in the first embodiment, and a product can be collected from each of the discharge ports 19 in each of the chip series units 220 through a single collection conduit without the interposition of the divergent branch conduit 71.

In addition, in the above-described embodiment, the heater 90 is provided adjacent to the microfluidic device 10 as reaction promoting means for promoting a reaction process of reaction elements contained in a mixed fluid flowing in the micro flow path 12 (the mixing and reaction flow path 15), but various types of means can be employed. For example, other heating means such as a microwave irradiation device may be employed instead of the heater 90. Alternatively, light irradiation means, vibrational energy providing means, voltage applying means, or the like, for example, may be employed as reaction promoting means other than the heating means. The light irradiation means is exemplified by an LED, an organic light-emitting device (OLED), a laser, an arc lamp, or the like. In addition, the vibrational energy providing means is exemplified by an ultrasonic generator, a piezoelectric transducer, or the like. The voltage applying means is exemplified by an electrode or the like. Alternatively, the reaction promoting means may be a combination of the above-described various types of means. Obviously, temperature control over fluids flowing in the micro flow path 12 is not required in some cases depending on the types of unit operations in the microfluidic devices 10. In that case, the reaction promoting means such as the heater 90 may not be provided.

In addition, the microfluidic module 200 according to the present embodiment can achieve complicate multistep unit operations (chemical treatments) since each of the chip series units 220 has the plurality of microfluidic devices 10 connected in series. In addition, the system 1 enables numbering-up because of including the plurality of chip series units 220 connected mutually in parallel as described above, so that yield of a product after unit operations are performed in the individual chip series units 220 can be easily increased. In other words, a manufacturing volume (industrial manufacturing volume) of a final product having been subjected to unit operation processing can be ensured by connecting the plurality of chip series units 220 in parallel. The large-scale microfluidic system 1 obtained by combining such series connection and parallel connection of the microfluidic devices 10 can be considered to be a desktop chemical plant.

As described above, the technology according to the present disclosure can be specified as a numbering-up method. In other words, the numbering-up method according to the present disclosure is a numbering-up method for performing numbering-up by increasing the number (parallel number) of the chip series units 220 in the microfluidic module 200. In addition, the technology according to the present disclosure can also be specified as a microfluidic module design method. In other words, the microfluidic module design method according to the present disclosure is a microfluidic module design method for determining the parallel number of the chip series units 220 in accordance with an objective manufacturing volume (an objective production volume) of a final product having been subjected to unit operation processing obtained in the microfluidic module 200. The final product having been subjected to unit operation processing stated here is a final product produced when unit operations are performed on fluids in the respective chip series units 220 arranged in (on the board 210 in) the microfluidic module 200. Although being a mere exemplification, a polymer-containing solution will be a final product in a case in which the present system 1 is constructed as a polymer fabrication system which will be described later. The above-described objective manufacturing volume is an objective manufacturing volume (objective production volume) of a final product in each of the microfluidic modules 200, and a final product conforming to the objective manufacturing volume (objective production volume) can be obtained for each of the microfluidic modules 200 by determining the parallel number of the chip series units 220 to be arranged in (on the board 210 in) the microfluidic module 200 in accordance with this objective manufacturing volume (objective production volume).

Furthermore, the entire system 1 can be made compact even if the number of the microfluidic modules 200 to be included in the system 1 is numbered up since the microfluidic modules 200 in the present embodiment have the board form. For example, also in the case in which the plurality of microfluidic modules 200 are installed on the rack 600 illustrated in Fig. 8, an installation space is not bulky since the microfluidic modules 200 have the board form, and a larger number of the microfluidic modules 200 can be installed in a limited space. In other words, numbering-up is facilitated by stacking the plurality of microfluidic modules 200 having the board form on one another to be arranged in multiple stages (hierarchically), which can easily increase yield of a product. In other words, unit operations as highly-accurate chemical/physical processes performed by the chip series units 220 and mass production of the product can be achieved together at a high level by numbering up the plurality of microfluidic modules 200 having the board form in multiple stages. In other words, the technology according to the present disclosure can also be specified as a numbering-up method for performing numbering-up by increasing the number of the microfluidic modules 200 in the system 1. In addition, the technology according to the present disclosure can be specified as a design method for the system 1 for determining the number of the microfluidic modules 200 in accordance with an objective manufacturing volume of the final product having been subjected to unit operation processing obtained in the plurality of microfluidic modules 200 in the system 1. The final product having been subjected to unit operation processing has been described above. The objective manufacturing volume of the final product stated here is an overall volume (a total volume) of the final product obtained in the plurality of microfluidic modules 200 and is a sum of the final product obtained in the individual microfluidic modules 200. In a way, it can be regarded as the sum of the final product in the entire system 1. As described, a final product conforming to the objective manufacturing volume (objective production volume) can be obtained in the entire system 1 by determining the number of the microfluidic modules 200 to be included in the system 1 in accordance with the objective manufacturing volume (objective production volume) of the final product as seen in the entire system 1.

Furthermore, in the microfluidic module 200, the microfluidic devices 10 on each stage in each of the chip series units 220A to 220J are connected to one another (10A to one another, 10B to one another, 10C to one another, 10D to one another) in parallel through the divergent branch conduits 51 in the respective supply units SU1 to SU5 in terms of the relationship with one another among the chip series units 220A to 220J. This can reduce the number of various instruments (such as the pump 60, the on-off valve 53, and the flow rate adjustment valve 54) for supplying raw materials from the supply apparatus 300 to each of the chip series units 220 even if the number of the chip series units 220 mounted on the board 210 of the microfluidic module 200 increases, which can reduce a construction cost of the system 1.

In addition, with the system 1 according to the present embodiment, an intermediate tank that retains raw materials is not provided in each of the supply units SU in the supply apparatus 300 on the way of the supply conduit 50 (the divergent branch conduits 51A to 51J, the main stream conduit portion 52) or on the way of the coupling conduit JC that couples the microfluidic devices 10 in the chip series unit 220 to one another. Therefore, suffering from inconveniences such as an unnecessary reaction (change) in the intermediate tank, an increase in operational rise time of the system 1, and an increase in the number of tanks (the number of instruments) can be avoided. In addition, prevention of an increase in the number of tanks can reduce a usage of a solvent to be used when the tanks are cleaned regularly or irregularly.

In addition, the system 1 according to the present embodiment enables easy exchange in the unit of the microfluidic module 200 (the board 210) since the microfluidic modules 200 have the board form, resulting in an excellent maintenance property. In other words, the system 1 of the present embodiment is provided with the on-off valve 53 for each of the supply conduits 50 (the main stream conduit portions 52) in the respective supply units SU of the supply apparatus 300 as illustrated in Fig. 5. Accordingly, in a case in which occurrence of an abnormality in any one of the microfluidic modules 200 is sensed during running of the system 1, supply of raw materials to the microfluidic module 200 in which the abnormality has been sensed can be stopped by activating the on-off valve 53 to close the flow path of the main stream conduit portion 52. This enables an inspection of the microfluidic module 200 in which the abnormality has been sensed or an exchange for a spare (new different) microfluidic module to be performed easily.

Note that examples of the abnormality in the microfluidic module 200 include obstruction, leakage, fluctuation in fluidic flow rate, and the like in the micro flow path 12 formed in the microfluidic device 10 mounted on the microfluidic module 200, obstruction, leakage, fluctuation in fluidic flow rate, and the like in the coupling conduit JC that couples the microfluidic devices 10 to each other. The control apparatus 500 may be such that the control apparatus 500 monitors a state signal output from the pressure sensor 56 and/or the flow rate sensor 55 provided for the supply conduit 50 in each of the supply units SU of the supply apparatus 300, for example, and senses occurrence of an abnormality in the microfluidic module 200 based on the received state signal. In addition, the flow rate sensor 55 and/or the pressure sensor 56 may be installed for each conduit (the coupling conduit JC, the divergent branch conduit 71, or the like) connected to the discharge port 19 of each of the microfluidic devices 10. Accordingly, obstruction, leakage, fluctuation in fluidic flow rate, or the like in the micro flow path 12 or a conduit connected to the discharge port 19 can be sensed for each of the microfluidic devices 10 mounted on the microfluidic module 200. Obviously, the flow rate sensor 55 and/or the pressure sensor 56 may be installed at a position different from that described above.

In addition, in the system 1 according to the present embodiment, the control apparatus 500 may sense occurrence of an abnormality for each of the chip series units 220 in the microfluidic module 200 and in a case in which occurrence of an abnormality is sensed in the chip series unit 220, stop supply of raw materials (fluids) to the relevant chip series unit 220. In this aspect, it is favorable to arrange at least one of the flow rate sensor 55 and/or the pressure sensor 56 for each of the chip series units 220. For example, occurrence of an abnormality (such as, for example, obstruction, leakage, or fluctuation in fluidic flow rate in the flow path) can be sensed for each of the chip series units 220 by installing the flow rate sensor 55 and/or the pressure sensor 56 in at least one place of conduits (such as the coupling conduit JC and the divergent branch conduit 71) connected to the discharge ports 19 of the microfluidic devices 10 included in each of the chip series units 220. On that occasion, it is preferable to install the flow rate sensor 55 and/or the pressure sensor 56 in the divergent branch conduit 71 connected to the discharge port 19 of the microfluidic device 10 located on the last stage (most downstream) in the chip series unit 220. This enables the abnormality (such as obstruction, leakage, or fluctuation in fluidic flow rate in the flow path, for example) occurred in any of the processing flow path portions of the chip series units 220 to be sensed more accurately. In addition, it is favorable to install the on-off valve 53 in each of the divergent branch conduits 51 in each of the supply units SU of the supply apparatus 300 as means for enabling switching between supply and stop of raw materials (fluids) for each of the chip series units 220.

As described above, the technology of the present disclosure can be regarded as a maintenance method in the system 1. In other words, the maintenance method in the system 1 is a maintenance method for, in a case in which an abnormality is sensed in any of the plurality of microfluidic modules 200 included in the system 1, stopping supply of fluids as raw materials to the microfluidic module 200 in which the abnormality has been sensed and replacing the microfluidic module 200 in which the abnormality has been sensed with a new (different) microfluidic module 200. As described, an abnormality (such as obstruction, leakage, or flow rate fluctuation) occurs in some of the microfluidic modules 200, the microfluidic modules 200 having the abnormality can be exchanged easily for new ones without affecting performance of the other normal microfluidic modules 200 or without stopping running of the entire system 1. A non-stop continuous operational system can be achieved by such characteristics. In addition, reliability, monitorability, and maintainability for numbering-up of the microfluidic modules 200 can be improved by independent operation of the microfluidic modules 200.

In addition, in the system 1 according to the present embodiment, the flow rate adjustment valve 54 may be installed for each of the divergent branch conduits 51 in each of the supply units SU, so that the flow rate of a raw material to be supplied from each of the divergent branch conduit 51 may be controlled for each of the chip series units 220. In addition, the supply apparatus 300 may individually include a pump that pumps a raw material for each of the chip series units 220 in the microfluidic module 200.

In addition, in the system 1 of the present embodiment, when the control apparatus 500, the plurality of microfluidic modules 200, the supply apparatuses 300 that supply raw materials to the plurality of microfluidic modules 200, and the collection apparatuses 400 that collect a product from the plurality of microfluidic modules 200 are collectively regarded as a concept of a block CB, the system 1 may be configured to include a plurality of blocks CB. In this case, various instruments (such as the pump 60, the on-off valve 53, and the flow rate adjustment valve 54) of the supply apparatus 300 belonging to one block CB are controlled by the corresponding control apparatus 500, and state signals of various sensors included in the one block CB are input to the corresponding control apparatus 500. The number of the microfluidic modules 200 belonging to one block CB may be determined in accordance with an amount of information processing such as control signals output to the various instruments (such as the pump 60, the on-off valve 53, and the flow rate adjustment valve 54) controlled by the control apparatus 500 and state signals input from the various sensors.

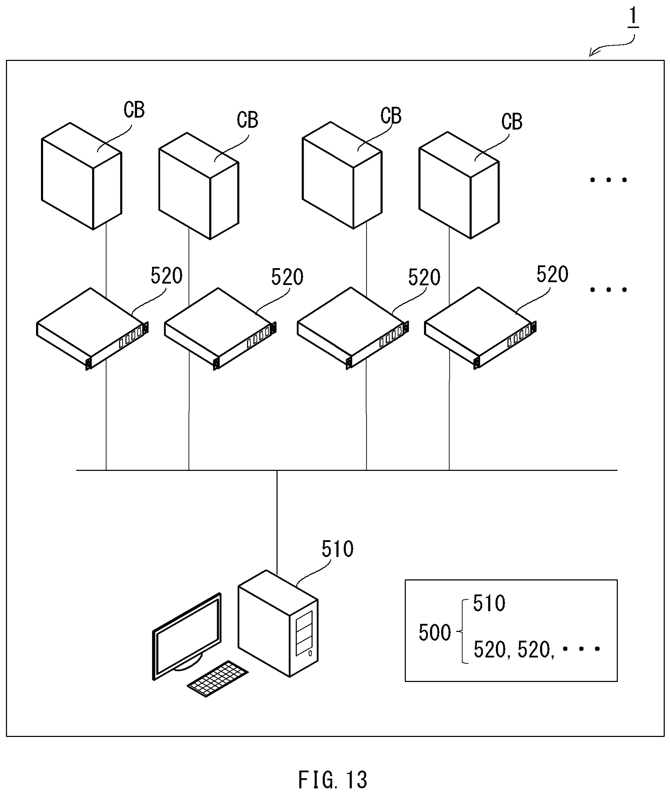

In addition, as illustrated in Fig. 13, for example, the system 1 may include, as the control apparatus 500, a central control apparatus 510 and a plurality of controllers 520 connected so as to be capable of communicating with the central control apparatus 510 through a network. Each of the controllers 520 may control, in the unit of the block CB, each of the instruments (such as the pump 60, the on-off valve 53, and the flow rate adjustment valve 54) of the supply apparatus 300 belonging to the block CB, and the central control apparatus 510 may exert integrated control over the respective controllers 520. Each of the controllers 520 receives state signals output from various sensors such as the flow rate sensor 55, the pressure sensor 56, and the temperature sensor 91 included in the corresponding block CB and transmits the state signals to the central control apparatus 510. The central control apparatus 510 determines an operational condition for each of the blocks CB and the like based on information received from each of the controllers 520, for example, and transmits operational condition information and the like to each of the controllers 520. Each of the controllers 520 determines the amount of control over the various instruments (such as the pump 60, the on-off valve 53, and the flow rate adjustment valve 54) of the supply apparatus 300 included in the corresponding block CB based on the operational condition information received from the central control apparatus 510, for example, and outputs control signals to the various instruments, thereby controlling them. By performing such hierarchical control, a large number of blocks CB (the respective instruments of the supply apparatuses 300 corresponding to a large number of the microfluidic modules 200) can be controlled simultaneously. However, various control techniques can be employed for the system 1 without being limited to the above-described control technique.

### <<Polymer Fabrication System>>

Next, an example of applying the system 1 according to the present embodiment to a fabrication system that fabricates polymers in a continuous process will be described. Here, a polymer fabrication system for causing a polymerization reaction of a monomer under the presence of a polymerization initiator to obtain a polymer which is a reaction product of the monomer will be described.

The schematic configuration of the system 1 has been described in Figs. 1 to 8. As the first raw material A stored in the raw material tank 40 of the first supply unit SU1, for example, a solution (a polymerization initiator R1 solution) containing a radical polymerization initiator R1 (hereafter simply referred to as the "polymerization initiator R1" in some cases) is held. The polymerization initiator R1 solution is a solution obtained by dissolving the polymerization initiator R1 in a solvent, for example. The polymerization initiator R1 generates a radical when treatment such as heating or light irradiation is performed, and promotes a polymerization reaction of a curable compound.

A solution (a monomer M1 solution) containing a monomer M1 which is a reactant is held in the raw material tanks 40 of the second supply unit SU2 to the fifth supply unit SU5. The monomer M1 is a monomer which is radically polymerized under the presence of the polymerization initiator R1. The monomer M1 solution is a solution obtained by dissolving the monomer M1 in a solvent, for example. The polymerization initiator R1 solution and the monomer M1 solution can be said to be dissimilar fluids different in type from each other.

Hereinafter, a method for fabricating a polymer using the system 1 will be described. Fabrication of a polymer using the system 1 is performed by activating the pump 60 of the supply apparatus 300 (300A to 300C) by control of the control apparatus 500 and continuously supplying the polymerization initiator R1 solution and the monomer M1 solution to each of the microfluidic modules 200 (300A to 300C).

In other words, the first supply unit SU1 of the supply apparatus 300 (300A to 300C) supplies the polymerization initiator R1 solution (the first raw material A) stored in the raw material tank 40 to each of the microfluidic modules 200 (200A to 200C) through the supply conduit 50. In the respective chip series units 220A to 220J arrayed in each of the microfluidic modules 200 (200A to 200C), the supply ports 16 (the first introduction flow paths 13) in the microfluidic devices 10A on the first stage are connected fluidically in parallel to one another via the divergent branch conduits 51A to 51J in the first supply unit SU1. Therefore, the polymerization initiator R1 solution (the first raw material A) is supplied through the divergent branch conduits 51A to 51J to each of the supply ports 16 (the first introduction flow paths 13) of the microfluidic devices 10A on the first stage connected in parallel among the respective chip series units 220A to 220J.

In addition, the second supply unit SU2 supplies the monomer M1 solution (the second raw material B) stored in the raw material tank 40 to each of the microfluidic modules 200 (200A to 200C) through the supply conduit 50. In the respective chip series units 220A to 220J arrayed in each of the microfluidic modules 200 (200A to 200C), the supply ports 17 (the second introduction flow paths 14) in the microfluidic devices 10A on the first stage are connected fluidically in parallel to one another via the divergent branch conduits 51A to 51J in the second supply unit SU2. Therefore, the monomer M1 solution (the second raw material B) is supplied through the divergent branch conduits 51A to 51J to each of the supply ports 17 (the second introduction flow paths 14) of the microfluidic devices 10A on the first stage connected in parallel among the respective chip series units 220A to 220J.

In addition, the third supply unit SU3 supplies the monomer M1 solution (the third raw material C) stored in the raw material tank 40 to each of the microfluidic modules 200 (200A to 200C) through the supply conduit 50. In the respective chip series units 220A to 220J arrayed in each of the microfluidic modules 200 (200A to 200C), the supply ports 16 (the first introduction flow paths 13) in the microfluidic devices 10B on the second stage are connected fluidically in parallel to one another via the divergent branch conduits 51A to 51J in the third supply unit SU3. Therefore, the monomer M1 solution (the third raw material C) is supplied through the divergent branch conduits 51A to 51J to each of the supply ports 16 (the first introduction flow paths 13) of the microfluidic devices 10B on the second stage connected in parallel among the respective chip series units 220A to 220J.

The same applies to supply of the monomer M1 solution to the microfluidic devices on the third and subsequent stages. In other words, the monomer M1 solution (the fourth raw material D) is supplied through the divergent branch conduits 51A to 51J in the fourth supply unit SU4 to each of the supply ports 16 (the first introduction flow paths 13) of the microfluidic devices 10C on the third stage connected in parallel among the respective chip series units 220A to 220J. Similarly, the monomer M1 solution (the fifth raw material E) is supplied through the divergent branch conduits 51A to 51J in the fifth supply unit SU5 to each of the supply ports 16 (the first introduction flow paths 13) of the microfluidic devices 10C on the fourth stage connected in parallel among the respective chip series units 220A to 220J.

Next, flows of the polymerization initiator R1 solution and the monomer M1 solution continuously supplied to the micro flow path 12 of the microfluidic device 10 included in each of the chip series units 220A to 220J arrayed in the microfluidic module 200 (200A to 200C) will be described. Here, the microfluidic device 10 is used as a microfluidic device reactor for mixing the polymerization initiator R1 solution and the monomer M1 solution as a combination of a plurality of dissimilar fluids in the micro flow path 12 and bringing them into contact with each other to cause a chemical reaction.

With reference to Fig. 4, the polymerization initiator R1 solution is supplied to the first introduction flow path 13 in the microfluidic device 10A on the first stage located on the frontmost stage of the chip series unit 220 (220A to 220J) through the supply port 16, and the monomer M1 solution is supplied to the second introduction flow path 14 through the supply port 17. The polymerization initiator R1 solution and the monomer M1 solution supplied to the microfluidic device 10A on the first stage join at the junction 18 and flow into the mixing and reaction flow path 15. The polymerization initiator R1 solution and the monomer M1 solution joined at the junction 18 are mixed by diffusive mixing in which the mixing and reaction flow path 15 serves as a mixing field while flowing along the mixing and reaction flow path 15 in the microfluidic device 10A on the first stage. Then, the mixed solution of the polymerization initiator R1 solution and the monomer M1 solution flowing in the mixing and reaction flow path 15 in the microfluidic device 10A on the first stage flows in the mixing and reaction flow path 15 in the state heated by the heater 90 to the reaction temperature range. This promotes the polymerization reaction of the monomer under the presence of the polymerization initiator, and a polymer is produced. On that occasion, part of the polymerization initiator R1 and at least part of the monomer M1 contained in the mixed solution are consumed by the polymerization reaction.

A produced solution (a mixed solution of the polymerization initiator R1 solution which remains and the produced polymer) produced in the course of flowing in the mixing and reaction flow path 15 of the microfluidic device 10A on the first stage is supplied to the supply port 17 of the microfluidic device 10B on the second stage connected in series to the microfluidic device 10A on the first stage through the coupling conduit JC. Note that the produced solution supplied to the second introduction flow path 14 through the supply port 17 of the microfluidic device 10B on the second stage may contain the monomer M1 solution which remains without causing a polymerization reaction. On the other hand, the monomer M1 solution is supplied to the first introduction flow path 13 of the microfluidic device 10B on the second stage through the supply port 16.

In the microfluidic device 10p on the second or subsequent stage, the (p-1)-th produced fluid (produced solution) is supplied to the second introduction flow path 14 from the microfluidic device 10(p-1) arranged on its immediately preceding stage (immediately upstream). In addition, the monomer M1 solution is supplied to the first introduction flow path 13 of the microfluidic device 10p on the second or subsequent stage as described above. Then, the monomer M1 solution supplied to the first introduction flow path 13 of the microfluidic device 10p on the second or subsequent stage join at the junction 18 with the (p-1)-th produced fluid (produced solution) supplied to the second introduction flow path 14 and flows into the mixing and reaction flow path 15. That is to say, in the microfluidic device 10p, the further monomer M1 solution which is a reaction raw material is additionally introduced into the (p-1)-th produced fluid (produced solution) supplied from the microfluidic device 10(p-1) arranged on the immediately preceding stage (immediately upstream). As described, the monomer M1 solution additionally supplied in the microfluidic device 10p on the second or subsequent stage will be called an "additional monomer solution" in some cases.

In the mixing and reaction flow path 15 in the microfluidic device 10p on the second or subsequent stage, the polymerization reaction of the monomer under the presence of the polymerization initiator is performed while the (p-1)-th produced fluid (produced solution) and the additional monomer solution (the monomer M1 solution) are mixed, as a result of which a polymer is newly produced. As described above, the p-th produced fluid (produced solution) produced in the microfluidic device 10p on the second or subsequent stage is transported to the microfluidic device 10(p+1) connected in series immediately downstream through the coupling conduit JC. Then, finally, in the microfluidic device 10N on the last stage (most downstream) (in the example illustrated in Fig. 4, the microfluidic device 10D on the fourth stage), a polymerization reaction of the monomer is made while a third produced fluid (produced solution) supplied from the microfluidic device 10C on the third stage arranged on the immediately preceding stage (immediately upstream) and the additionally supplied additional monomer solution (the monomer M1 solution) are mixed in the mixing and reaction flow path 15, as a result of which a polymer is newly produced. As described above, an N-th produced fluid (produced solution) containing the polymer produced in the mixing and reaction flow path 15 of the microfluidic device 10N on the last stage (most downstream) (the microfluidic device 10D on the fourth stage) is collected (retained) to (in) the collection tank 80 as a final product.

### <Other Embodiments>

Next, other embodiments will be described.

### <<Application Example of Microfluidic System>>

Hereinafter, an application example of using various operations as unit operations to be performed in the microfluidic device 10 will be described based on the configuration of the chip series unit 220 in Fig. 4. Note that in the microfluidic device 10 illustrated in Fig. 3, it is illustrated that the number of supply ports (16, 17) is two and that the number of the discharge port 19 is one, but the following application examples are not limited to these forms, and a change may be added as appropriate in accordance with an individual application example. In addition, a flow path length of the microfluidic device 10, a sectional shape of the flow path, a sectional area, a planar shape of the flow path, a flow rate of fluids introduced into the microfluidic device 10, a flow velocity, and the like can be adjusted as appropriate in accordance with the type of unit operation.

In addition, the following description is a mere exemplification, and substitution of the microfluidic device 10 included in the chip series unit 220 (see Fig. 4) for the microfluidic device 10 that performs another unit operation, addition of the microfluidic device 10 that performs another unit operation, shuffling of the order of the microfluidic devices 10 that perform unit operations, and the like can be performed. Furthermore, in a case of supplying (introducing) gas to the microfluidic devices 10, the material of the microfluidic devices 10, various conduits, joints that connect the conduits and the microfluidic devices 10, and the like shall endure introduction of gas.

### <<As to Application Example Including Mixing and Reaction as Operation Unit>>

A Reynolds number of fluids in the micro flow path 12 of the microfluidic device 10 is smaller than one in most cases, and a laminar flow state is brought about unless the flow velocity is extremely high. In addition, since a diffusion time is proportional to the square of the flow path width in the micro flow path 12, mixing progresses because of diffusion of molecules contained in fluids without actively mixing the fluids as the micro flow path 12 has a smaller width. Therefore, reaction and extraction are easier to occur by introduction of fluids of various raw materials into the micro flow path 12.

In addition, reaction and extraction are generally more efficient as a specific interfacial area is larger. Here, the specific interfacial area means an area ratio of an interface to an overall volume of phases when the interface is formed by the phases brought into contact with each other. In reaction and extraction, a substance can move to another phase only through the interface. Thus, a large specific interfacial area means higher efficiency of reaction and extraction accordingly. Mixing and reaction can be performed immediately by introducing gas and liquid or liquid and liquid as introduction fluids into the microfluidic device 10 utilizing this principle.

Specifically, a gas-liquid phase can be generated in the micro flow path 12 by introducing gas from the first introduction flow path 13 of the microfluidic device 10 and liquid from the second introduction flow path 14. Alternatively, a single liquid phase or liquid-liquid two phases can be generated in the micro flow path 12 by introducing liquid from the first introduction flow path 13 of the microfluidic device 10 and liquid from the second introduction flow path 14.

In a case in which gas-liquid mixing and reaction is performed, there are various flow patterns in the micro flow path 12 of the microfluidic device 10 depending on a flow condition for a gas-liquid flow. One of the flow patterns can include a slug flow. The slug flow refers to an alternate flow of fluids having no affinity, such as gas and liquid, in the micro flow path 12 of the microfluidic device 10. Mass of each phase is called a slug. Since high local mixing performance and a gentle agitation condition (low shear) can both be achieved, mixing and reaction can be performed efficiently by generating the slug flow in a case of performing a mixing and reaction operation utilizing the microfluidic devices 10. In the gas-liquid mixing and reaction, a large, uniform gas-liquid interfacial area per volume is obtained in a reaction field in which a gas-liquid slug has arisen. In addition, mixing in the slug is promoted by a circulatory flow in the slug, and a mass transfer coefficient increases.

Utilizing such advantages, the gas-liquid mixing and reaction can include the following example. For example, in the microfluidic device 10A in the chip series unit 220 (see Fig. 4), a solvent (liquid) containing a substratum as the raw material A and a solvent (liquid) containing a catalyst as the raw material B are introduced respectively into the supply ports 16 and 17 and mixed, and are discharged from the discharge port 19. When the mixed solution of the raw material A and the raw material B discharged from the discharge port 19 and substratum gas (for example, oxygen or hydrogen) as the raw material C are introduced respectively into the supply ports 16 and 17 of the microfluidic device 10B connected in series to the downstream side of the microfluidic device 10A to generate a slug flow in the micro flow path 12, a gas-liquid reaction can be caused efficiently in the micro flow path 12 of the microfluidic device 10B. In this application example, the microfluidic devices 10C, 10D and the like may be omitted. On the other hand, the microfluidic devices 10C and 10D may be provided, and liquid containing another substratum and gas (active gas or inert gas) may be introduced into these microfluidic devices 10C and 10D to perform still another mixing and reaction.

Note that methods for generating a slug flow in the micro flow path 12 of the microfluidic device 10 include adjustment of the shape of each of the fluidic supply ports (16, 17). In addition, in the chip series unit 220 of the microfluidic module 200, the slug flow can be stabilized by additionally introducing substratum gas when introducing a reaction solution produced in the microfluidic device 10 on the upstream side into the microfluidic device 10 connected in series to the downstream side.

### <<Application Example Including Liquid Phase Mixing and Reaction as Operation Unit>>

For example, in the microfluidic device 10A of the chip series unit 220 (see Fig. 4), a solvent (liquid) containing a substratum as the raw material A and a solvent (liquid) containing another substratum as the raw material B are introduced into the supply ports 16 and 17 to perform liquid phase mixing and are discharged from the discharge port 19. When the mixed solution of the raw material A and the raw material B discharged from the discharge port 19 and a solvent (liquid) containing a catalyst as the raw material C are introduced respectively into the supply port 17 and the supply port 16 of the microfluidic device 10B connected in series to the downstream side of the microfluidic device 10A and are mixed in the micro flow path 12, a liquid phase reaction of the substratum contained in the raw material A and the substratum contained in the raw material B can be caused efficiently in the micro flow path 12 of the microfluidic device 10A.

In addition, the microfluidic device 10B may have temperature control means according to necessity. In addition, by connecting the microfluidic device 10C in series to the downstream side of the microfluidic device 10B and introducing the reaction solution discharged from the discharge port 19 of the microfluidic device 10B and a solvent (liquid) as a raw material D containing a substratum which is the same as or different from that of the raw material A or the raw material B respectively into the supply port 17 and the supply port 16, liquid phase mixing of the reaction solution discharged from the microfluidic device 10B and the raw material D can be performed. Then, by connecting the microfluidic device 10D in series to the downstream side of the microfluidic device 10C and introducing the mixed solution discharged from the discharge port 19 of the microfluidic device 10C and a solvent containing a catalyst as the raw material E respectively into the supply port 17 and the supply port 16 of the microfluidic device 10D, a liquid phase reaction of a substance contained in the mixed solution discharged from the microfluidic device 10C and the raw material E can be caused. In addition, the product produced in the microfluidic device 10D can be collected from the discharge port 19 of the microfluidic device 10D.

Such a unit operation is effective in a case in which a product (intermediate) obtained by the microfluidic device 10B is very unstable. It depends on that the microfluidic device 10B basically does not contact the outside of the device or has no opportunity to contact air. In addition, the embodiment of polymer fabrication described above is an example of this liquid phase mixing and reaction. By performing such reaction integration, an objective substance can be obtained with high yield.

### <<Application Example Including Extraction, Distillation, and Condensation as Operation Units>>

In addition, in terms of liquids in the above-described liquid phase mixing and reaction, an aqueous liquid and an oily liquid are not distinguished, whilst an aqueous liquid may be used as the liquid of the raw material A, and an oily liquid may be used as the raw material B, for example. In the case in which such fluids having no affinity are introduced into the micro flow path 12 of the microfluidic device 10, phase confluence, mixing and reaction, solvent extraction, phase separation, and the like can be performed simultaneously by utilizing a parallel multiphase flow. The parallel multiphase flow refers to a parallel flow of at least two mobile phases such as an oily liquid and an aqueous liquid utilizing a pressure-driven flow.

In order to stably form a micro parallel multiphase flow and to induce phase separation under wide flow rate conditions in the micro flow path 12 of the microfluidic device 10, it is only necessary to provide the micro flow path 12 of the microfluidic device 10 with a structure for stabilizing the parallel multiphase flow, to modify a surface of the micro flow path 12, or to control a contact angle between the surface and a mobile phase in the micro flow path 12 as well as a sectional depth of the micro flow path 12.

Specific examples of the parallel multiphase flow can include a parallel two-phase flow, for example. Since the influence of gravity is small in the micro flow path 12 in the microfluidic device 10, a liquid-liquid interface can be formed in the vertical direction in a case in which an oily liquid (for example, an organic solvent) and an aqueous liquid, for example, are used as the mobile phases. In addition, specific examples of the parallel multiphase flow can also include a parallel three-phase flow. Fluids to be the mobile phases can include a heavy liquid (an aqueous liquid), a light liquid (an oily liquid), a heavy liquid (an aqueous liquid), and the like, for example.

As to extraction by means of an oily liquid utilizing the parallel multiphase flow, an aqueous liquid containing an objective substance as the raw material A and an oily liquid (an organic solvent) that dissolves the objective substance as the raw material B are introduced into the microfluidic devices 10A in the chip series unit 220 (see Fig. 4), for example, from the supply port 16 and the supply port 17, and the parallel multiphase flow is formed to dissolve the objective substance into the oily liquid by diffusion. The oily liquid in which the objective substance has been dissolved can thereby be obtained. Note that in this case, the microfluidic device 10A may be provided with two discharge ports. On that occasion, it is preferable for the discharge ports to be configured such that the aqueous liquid moves to one of the discharge ports and the oily liquid moves to the other discharge port. Such an extraction operation enables an objective product to be extracted in a much shorter time than in a conventional extraction method. This is because the specific interfacial area between the aqueous liquid and the oily liquid is large in the micro flow path 12 of the microfluidic device 10A.

In addition, the microfluidic device 10B to which the oily liquid discharged from the microfluidic device 10A and gas are respectively to be introduced can be connected in series to the downstream side of the microfluidic device 10A, and evaporation, distillation, and condensation of the oily liquid can also be performed in this microfluidic device 10B. For example, the gas and oily liquid may be introduced respectively into the supply port 16 and the supply port 17 of the microfluidic device 10B to generate a gas-liquid phase in the micro flow path 12 of the microfluidic device 10B, and a temperature of the micro flow path 12 may be adjusted such that the liquid vaporizes. In this case, the microfluidic device 10B is provided with temperature control means for controlling the temperature of the fluid flowing in the micro flow path 12.

The oily liquid vaporized by heating with the temperature control means moves in the micro flow path 12 of the microfluidic device 10B together with the gas introduced from the supply port 16. The microfluidic device 10B may be provided respectively with a discharge port from which gas is to be discharged and a discharge port from which a mobile phase of the oily liquid is to be discharged. In addition, the microfluidic device 10C connected in series to the downstream side of the microfluidic device 10B may be coupled to the above-described two discharge ports of the microfluidic device 10B. Then, the microfluidic device 10C can include a form in which a micro flow path in which gas flows and a micro flow path in which liquid flows are provided to adjust the gas and liquid discharged from the microfluidic device 10B so as to each flow separately.

In the microfluidic device 10B, the gas discharged from the discharge port from which gas is to be discharged is mixed gas of the initially introduced gas and the vaporized oily liquid, and in the microfluidic device 10C on the downstream side, a distillation operation can be performed by condensing the vaporized oily liquid by cooling, for example. On the other hand, the oily liquid discharged from the discharge port from which the oily liquid is to be discharged in the microfluidic device 10B decreases relative to the quantity of the initially introduced oily liquid by the above-described operation, so that condensation of the substance transitioned to the oily liquid by the extraction operation is performed. Note that although the foregoing has been described presupposing that the raw material A and the raw material B introduced into the microfluidic device 10A will form the parallel multiphase flow, the introduction may be performed such that they will form a slug flow.

### <<Application Example Including Liquid Phase Reaction as Unit Operation>>

A liquid phase reaction can be performed as a unit operation. In the liquid phase reaction, a catalyst is fixed (not illustrated) to the micro flow path 12 of the microfluidic device 10A in the chip series unit 220 (see Fig. 4), for example. Then, the raw material A containing a substratum and the raw material B containing another substratum are introduced respectively into the supply port 16 and the supply port 17 of the microfluidic device 10A, and they are brought into contact with the catalyst arranged in the micro flow path 12 of the microfluidic device 10A to cause a chemical reaction. A product obtained by the chemical reaction flows in the micro flow path 12 as it is and is discharged from the discharge port 19 of the microfluidic device 10A.

In addition, another catalyst may be arranged in the micro flow path 12 of the microfluidic device 10B connected in series to the downstream side of the microfluidic device 10A, for example. Then, in the microfluidic device 10B, a liquid containing the product discharged from the microfluidic device 10A and the raw material C containing still another substratum may be introduced respectively into the supply port 16 and the supply port 17 to cause another chemical reaction, thereby synthesizing a substance different from the substance produced in the microfluidic device 10A. A similar operation may be performed in the microfluidic devices 10C and 10D sequentially connected in series to the downstream side of the microfluidic device 10B. As described, a desired objective substance can be obtained by causing solid phase reactions in the plurality of microfluidic devices 10.

In addition, not only a liquid containing a substratum but also gas (for example, hydrogen) can also be introduced into the microfluidic device 10 intended for a liquid phase reaction. Such a microfluidic device 10 enables a reaction of a three-phase system (solid/liquid/gas) of liquid-gas (for example, hydrogen gas) containing solid catalyst-substratum, for example. In the system 1, the microfluidic device 10 that performs such a unit operation can be incorporated optionally.

### <<Application Example Including Liquid Phase Reaction and Multistage Distillation as Unit Operations>>

For example, the raw material A (liquid) containing a substratum and the raw material B (liquid different in volatility from the liquid of the raw material A) containing a substratum may be introduced respectively into the micro flow path 12 of the microfluidic device 10A in the chip series unit 220 (see Fig. 4) through the supply port 16 and the supply port 17 and mixed, and a mixture containing the raw material A and the raw material B may be discharged from the discharge port 19 and introduced into the supply port 16 of the microfluidic device 10B connected in series to the downstream side. Note that in this example, the microfluidic device 10A may be a chip having a single supply port.

In addition, an aspect in which a catalyst is arranged in the micro flow path 12 and/or an aspect in which the micro flow path 12 is heated by a heater may be employed for the microfluidic device 10B. With such an aspect, the respective substrata contained in the raw material A and the raw material B can be caused to make a liquid phase reaction to produce a liquid containing a product in the micro flow path 12 of the microfluidic device 10B, and the liquid containing the product can be discharged from the discharge port 19 and introduced into the microfluidic device 10C on the downstream side.

In addition, the microfluidic device 10C may have an aspect in which the micro flow path 12 can be heated by a heater or the like, for example, and the liquid containing the product introduced from the microfluidic device 10B may be heated in the micro flow path 12. The liquid containing the product introduced into the microfluidic device 10C is a mixed liquid derived from the raw material A and the raw material B and thus can be heated under a condition that either liquid vaporizes preferentially utilizing the difference in volatility.

In addition, the microfluidic device 10C may be provided respectively with a discharge port from which a liquid is to be discharged and a discharge port from which gas is to be discharged (not illustrated). Then, a liquid discharged from the liquid discharge port of the microfluidic device 10C becomes a mixture of a product and a liquid having low volatility. On the other hand, gas discharged from the gas discharge port becomes gas obtained by vaporization of a liquid having high volatility. Then, the microfluidic device 10D is connected in series to the downstream side of the microfluidic device 10C, and the gas discharged from the discharge port of the microfluidic device 10C is introduced into the microfluidic device 10D. Then, the gas (vaporized liquid) introduced into the micro flow path 12 in the microfluidic device 10D can be condensed by cooling the micro flow path 12 in this microfluidic device 10D with appropriate cooling means. On the other hand, the liquid discharged from the liquid discharge port of the microfluidic device 10C may be introduced into the microfluidic device 10E connected in parallel to the microfluidic device 10D to repeat the operation performed in the microfluidic device 10C, thereby vaporizing a small quantity of the liquid having high volatility contained in the introduced liquid to perform gas-liquid separation. As a result, the liquid having low volatility contained in the introduced liquid can be increased in purity. In addition, the microfluidic device 10E may also be provided respectively with a discharge port from which gas is to be discharged and a discharge port from which a liquid is to be discharged. Then, gas obtained by vaporization of the liquid having high volatility may be discharged from the gas discharge port in the microfluidic device 10E, and the liquid having low volatility containing a product may be discharged from the liquid discharge port. By repeatedly performing such operations in the chip series unit 220, an objective substance can be contained in a highly-pure liquid having low volatility, and the liquid having high volatility can be collected at a high purity. Note that although the above-described description has described an example associated with a reaction of substrata, the above-described operations may be utilized only for separating a mixture of dissimilar liquids without being associated with such a reaction.

### <<Application Example Including Slurry Mixing as Unit Operation>>

Unit operations through use of the microfluidic device 10 can include slurry mixing. A slurry here refers to a suspension in which solid particles are dispersed in a liquid dispersion medium. For example, by introducing a liquid dispersion medium as the raw material A and a medium containing solid particles as the raw material B into the microfluidic device 10 at the supply port 16 and the supply port 17, they can be mixed in the micro flow path 12 to prepare a slurry as a product. In the microfluidic device 10 used for slurry mixing, slurry mixing can be performed efficiently by, for example, providing an inclined groove in a bottom surface of the micro flow path 12, adjusting an aspect ratio of a flow path section of the micro flow path 12, or the like. In addition, for the micro flow path 12 of the microfluidic device 10, a form in which branched flow paths branched into two on the way of the flow path are provided and in which the branched flow paths join again on the downstream side may be employed. This enables slurry mixing to be performed efficiently. In addition, a physical property of a liquid contained in the slurry can be changed in the micro flow path 12 by connecting the microfluidic device 10B in series to the downstream side of the above-described microfluidic device 10 and introducing the slurry discharged from the above-described microfluidic device 10A and a liquid identical to or different from the liquid contained in the slurry as the raw material C into the micro flow path 12 of the microfluidic device 10B.

### <<Solid Phase Extraction as Unit Operation>>

In a case of performing solid phase extraction as a unit operation, for example, first, a stationary phase such as a sorbent is fixed to the micro flow path 12 of the microfluidic device 10, and a fluid containing an objective substance is introduced into the micro flow path 12 as the raw material A and caused to pass through the stationary phase. On that occasion, if impurities of the objective substance adsorb to the stationary phase, a fluid containing an objective compound can be collected to be used for an analysis or the like. This enables cleanup of the objective substance. In contrast, in a case of causing the objective compound to adsorb to the stationary phase, the raw material B as another mobile phase can be flowed to elute and collect the objective substance, and this can also be used for an analysis. This also enables condensation of the objective substance and exchange of the fluid (solvent) containing the objective substance. The microfluidic device 10 that performs such unit operations can be incorporated optionally into the system 1.

### <<Separation and Classification of Particles as Unit Operation>>

Separation of target particles can be performed utilizing the microfluidic device 10. A driving source of separation of particles performed by the microfluidic device 10 includes an active technique through use of an external field such as an electric field, a magnetic field, a sound field, or an optical field and a passive method through use of a flow field generated by a flow path structure. In the present application example, the above-described passive method will be described. The passive method enables particles to be separated only by introducing a particle suspension liquid as a fluid into the microfluidic device 10. Examples of the flow path structure of the microfluidic device 10 can include a form (a support pillar array flow path form) in which a large number of pillar objects extending in the vertical direction are arranged regularly in the micro flow path 12 of the microfluidic device 10A in the chip series unit 220 (see Fig. 4). In the micro flow path 12 of such a form, particles different in diameter contained in a particle suspension sample are separated in accordance with a geometric shape of a support pillar array. Specifically, particles having a large diameter travel obliquely along an inclination of the support pillar array, and particles having a small diameter move generally in parallel to a fluid flow direction. The particles having a large diameter and the particles having a small diameter can be separated utilizing such a principle. It is preferable to provide the microfluidic device 10 with at least two discharge ports for discharging liquids containing separated particles.

In addition, further particle separation can also be performed by connecting the microfluidic device 10B having a flow path structure having a support pillar array different from that of the microfluidic device 10A in series to the downstream side of the microfluidic device 10A and introducing one of particle suspension liquids discharged from the microfluidic device 10A into the microfluidic device 10B. This operation can also be performed in the microfluidic device 10 on the downstream side having a flow path structure having a different support pillar array to obtain a particle suspension liquid having a desired particle size. The microfluidic device 10 that performs such unit operations can be incorporated optionally into the system 1.

### <<Crystallization as Unit Operation>>

Crystallization is a unit operation for fabricating crystal particles utilizing a phenomenon of precipitating crystals from a liquid phase, for example. Crystallization methods utilizing the microfluidic device 10 can include poor solvent crystallization. In poor solvent crystallization, a large quantity of an organic solvent or the like is added as a poor solvent to a good solvent such as water in which a solute has been dissolved, thereby degrading the ability as the good solvent to precipitate crystals of the solute. It is important in crystallization to control the degree of supersaturation. The degree of supersaturation can be increased by increasing a speed of mixing the good solvent in which the solute has been dissolved and the poor solvent.

Utilizing such a principle, a good solvent in which a solute has been dissolved as the raw material A and a poor solvent as the raw material B are introduced respectively into the supply port 16 and the supply port 17 in the microfluidic device 10A in the chip series unit 220 (see Fig. 4), for example. Then, the degree of supersaturation can be increased by performing their liquid phase mixing in the micro flow path 12 of the microfluidic device 10A, and crystallization of the solute mentioned above can be performed. In addition, the mixing speed in the micro flow path 12 can be controlled to adjust a particle size of crystals to be obtained. In addition, a liquid discharged from the discharge port 19 of the microfluidic device 10A contains a crystallized solute. Crystals having a desired particle size can also be obtained by connecting the microfluidic device 10B and the like for performing separation and classification of particles described above in series to the downstream side of the microfluidic device 10A and introducing the liquid discharged from the microfluidic device 10A into the microfluidic device 10B.

### <<Cell Culture as Unit Operation>>

Cell culture can be performed as a unit operation. In a case of performing cell culture using the microfluidic device 10, the following operation can be exemplified, for example. For example, surface treatment may be performed on the micro flow path 12 of the microfluidic device 10 according to necessity. Then, cells may be fixed in the micro flow path 12 by introducing the cells into the micro flow path 12 of the microfluidic device 10 and leaving the cells at rest. Then, a culture medium as a fluid is introduced into the microfluidic device 10 and perfused. Next, external stimulation treatment may be performed by introducing a liquid containing a stimulant (such as a hyperglycemic culture medium or medicine) for the cells into the microfluidic device 10 and exposing this to the cells. The microfluidic device 10 that performs the above-described operation may be arranged most downstream of the chip series unit 220 (see Fig. 4). In the microfluidic device 10 located at the upstream side, a culture medium to be perfused can be prepared, or a stimulant can be mixed stepwise into the culture medium to be perfused. In addition, in order to collect a secretion of cells from the microfluidic device 10 located most downstream of the chip series unit 220, a configuration in which a liquid for collecting the secretion is introduced can also be adopted. In addition, cultured cells may be collected as appropriate, and mRNA or protein may be collected to be used for an analysis.

Note that various products are obtained by the above-described unit operations, and detection of products can also be performed in the micro flow path 12 of the microfluidic device 10. Examples of a detector can include an absorbance detector, a fluorescence detector, and a thermal lens detector.

### Description of the Reference Numerals and Symbols

- 1: Microfluidic system
- 10: Microfluidic device
- 12: Micro flow path
- 100: Mixing and reaction unit
- 200: Microfluidic module
- 300: Supply apparatus
- 400: Collection apparatus
- 500: Control apparatus

## Claims

1. A microfluidic module including a plurality of microfluidic devices, each having a micro flow path formed in a substrate and being configured to perform a unit operation on a fluid flowing in the micro flow path, the microfluidic module comprising
a plurality of chip series units, each at least including the plurality of microfluidic devices connected in series to one another, the plurality of chip series units being connected in parallel to one another.

2. The microfluidic module according to claim 1, wherein the microfluidic module has a board form in which the plurality of microfluidic devices included in each of the chip series units connected in parallel are mounted on a board.

3. The microfluidic module according to claim 1, wherein the chip series units each include a microfluidic device reactor having a mixing and reaction flow path configured to mix a plurality of dissimilar fluids and cause reaction elements contained in a mixed fluid of the plurality of dissimilar fluids to react.

4. The microfluidic module according to claim 3, wherein the chip series units each include a plurality of the microfluidic device reactors.

5. A microfluidic system comprising a plurality of the microfluidic modules according to claim 2 having the board form.

6. The microfluidic system according to claim 5, wherein the plurality of microfluidic modules having the board form are arranged in multiple stages.

7. A microfluidic system including a plurality of microfluidic devices, each having a micro flow path formed in a substrate and being configured to perform a unit operation on a fluid flowing in the micro flow path, the microfluidic system comprising
a plurality of microfluidic modules having a board form in which the plurality of microfluidic devices connected in parallel to one another are mounted on a board.

8. The microfluidic system according to claim 7, wherein the plurality of microfluidic modules having the board form are arranged in multiple stages.

9. A numbering-up method for performing numbering-up by increasing a parallel number of the chip series units in the microfluidic module according to claim 1.

10. A microfluidic module design method for determining a parallel number of the chip series units in accordance with an objective manufacturing volume of a final product having been subjected to unit operation processing obtained in the microfluidic module according to claim 1.

11. A numbering-up method for performing numbering-up by increasing the number of the microfluidic modules in the microfluidic system according to claim 5.

12. A microfluidic system design method for determining the number of the microfluidic modules in accordance with an objective manufacturing volume of a final product having been subjected to unit operation processing obtained in a plurality of the microfluidic modules in the microfluidic system according to claim 5.

13. A maintenance method for, in a case in which an abnormality is sensed in any one of the microfluidic modules in the microfluidic system according to claim 5, stopping supply of a fluid as a raw material to the one of the microfluidic modules in which the abnormality has been sensed and replacing the one of the microfluidic modules in which the abnormality has been sensed with a new microfluidic module.
